# EUROPEAN PATENT APPLICATION

(11) **EP 4 120 732 A1**
(43) Date of publication of application: **18.01.2023**
(21) Application number: 21792189.9
(22) Date of filing: 24.02.2021
(51) Int. Cl.: H04W 28/16

(54) **MEDIA PACKET TRANSMISSION METHOD, APPARATUS, AND SYSTEM**

(30) Priority: 22.04.2020 CN 202010322719
(71) Applicant: Huawei Technologies Co., Ltd., Shenzhen, Guangdong 518129, (CN)
(72) Inventor: LI, Yongcui, Shenzhen, Guangdong 518129 (CN); PAN, Qi, Shenzhen, Guangdong 518129 (CN); HUANG, Zhenglei, Shenzhen, Guangdong 518129 (CN); NI, Hui, Shenzhen, Guangdong 518129 (CN)
(74) Representative: Gill Jennings & Every LLP
(86) International application number: PCT/CN2021/077697
(87) International publication number: WO 2021/212999

(57) **Abstract**

Embodiments of this application provide a media packet transmission method, an apparatus, and a system, and relate to the field of communication technologies, to resolve a technical problem in a conventional technology that buffering waiting time is long when a terminal plays a media packet. The method includes: A user plane network element receives a media packet from an application server, determines association information corresponding to the media packet, where the association information is information associated with a client operation corresponding to the media packet, and sends the media packet to an access network element via a QoS flow corresponding to the association information.

## Description

This application claims priority to Chinese Patent Application No. 202010322719.2, filed with the China National Intellectual Property Administration on April 22, 2020 and entitled "MEDIA PACKET TRANSMISSION METHOD, APPARATUS, AND SYSTEM", which is incorporated herein by reference in its entirety.

### TECHNICAL FIELD

The present invention relates to the field of communication technologies, and in particular, to a media packet transmission method, an apparatus, and a system.

### BACKGROUND

As the new media industry rapidly develops, services such as ultra high-definition video and virtual reality (virtual reality, VR) 360° video are widely used. As a result, users have requirements for larger network bandwidth. When data of an existing media service is transmitted, the data of the media service may be encoded by using an encoding technology, to generate a media packet, so as to implement compression of the data of the media service. This reduces a requirement of the data of the media service on network bandwidth, shortens transmission time, and improves user experience.

Currently, each terminal may request different media packets from an application server through a user plane network element based on different client operations of a user. When sending a media packet to each terminal, the user plane network element may send the media packet to each terminal based on a sequence of media packets sent by the application server.

To be specific, in a conventional technology, when a terminal obtains a media packet, the media packet is sent to the terminal only after the user plane network element sends a media packet that is before the media packet corresponding to the terminal. Consequently, when playing the media packet, the terminal waits for long buffering time, and user viewing experience is affected. For example, a client operation of a terminal 1 is pause. Although the client operation of the terminal 1 is pause, the terminal 1 still requests a media packet from the application server through the user plane network element, to perform background caching. In this process, if a user of a terminal 2 wants to start playing a video, a client operation of the terminal 2 is initial playing. When the user plane network element sends a media packet to the terminal 2, although the client operation of the terminal 1 is pause, the user plane network element still needs to first send, to the terminal 1, the media packet that is before the media packet corresponding to the terminal 2 and that corresponds to the terminal 1, before sending the media packet corresponding to the terminal 2 to the terminal 2. Consequently, a user of the terminal 2 waits for long buffering time when playing the media packet. For another example, in a process in which a client operation of a terminal 1 is normal playing, a user of the terminal 1 wants to fast forward or rewind, in other words, the client operation of the terminal 1 changes from normal playing to jumping. When sending a media packet corresponding to jumping to the terminal 1, the user plane network element still needs to first send, to the terminal 1, a media packet that is before the media packet corresponding to jumping and that corresponds to normal playing, before sending the media packet corresponding to jumping to the terminal 1. Consequently, the user of the terminal 1 waits for long buffering time during fast forwarding or rewinding.

### SUMMARY

In view of this, an objective of embodiments of this application is to provide a media packet transmission method, an apparatus, and a system, to resolve a technical problem in a conventional technology that buffering waiting time is long when a terminal plays a media packet.

According to a first aspect, a media packet transmission method is provided. The method includes: A user plane network element receives a media packet from an application server; the user plane network element determines association information corresponding to the media packet, where the association information is information associated with a client operation corresponding to the media packet; and the user plane network element sends the media packet to an access network element via a QoS flow corresponding to the association information.

Based on the first aspect, in this embodiment of this application, the user plane network element may determine, based on the received media packet sent by the application server, the association information corresponding to the media packet, and send the media packet to the access network element via the QoS flow corresponding to the association information. Compared with a conventional technology in which a user plane network element sequentially sends media packets to each terminal based on a sequence of media packets sent by an application server, in this embodiment of this application, the user plane network element may send the media packet to the access network element via the QoS flow that corresponds to the association information corresponding to the media packet, to implement differentiated transmission of media packets, shorten buffering waiting time when a terminal plays the media packets, and improve user viewing experience.

In a possible design, with reference to the first aspect, the user plane network element identifies the media packet that carries the association information, to obtain the association information; the user plane network element receives the association information from the application server; or the user plane network element determines, based on an obtained media packet request that is for requesting the media packet from the application server, a client operation corresponding to the media packet request, and determines the association information based on the client operation that corresponds to the media packet request corresponding to the media packet.

Based on this possible design, the user plane network element may determine, in any one of the foregoing manners, the association information corresponding to the media packet. This provides a feasible solution for the user plane network element to determine the association information corresponding to the media packet.

In a possible design, with reference to the first aspect or the possible designs of the first aspect, the user plane network element performs application layer identification on the media packet to obtain the association information; the user plane network element performs transport layer identification on the media packet to obtain the association information; or the user plane network element performs network layer identification on the media packet to obtain the association information.

Based on this possible design, the user plane network element may determine, in any one of the foregoing manners, the association information corresponding to the media packet. This provides a feasible solution for the user plane network element to determine the association information corresponding to the media packet.

In a possible design, with reference to the first aspect or the possible designs of the first aspect, the media packet request includes a real time streaming protocol RTSP request, and the user plane network element determines, based on the RTSP request, the client operation corresponding to the media packet request; or the media packet request includes an index number of the media packet, and the user plane network element determines, based on the index number of the media packet, the client operation corresponding to the media packet request.

Based on this possible design, the user plane network element may determine, based on the RTSP request or the index number of the media packet, the client operation corresponding to the media packet request. This provides a feasible solution for the user plane network element to determine the client operation corresponding to the media packet request.

In a possible design, with reference to the first aspect or the possible designs of the first aspect, the association information includes first indication information, where the first indication information indicates the client operation corresponding to the media packet; or the association information includes second indication information, where the second indication information indicates a priority that corresponds to the client operation corresponding to the media packet.

Based on this possible design, the association information may be the client operation corresponding to the media packet, the priority corresponding to the client operation, other information associated with the client operation on the media packet, or the like. This is not limited.

In a possible design, with reference to the first aspect or the possible designs of the first aspect, when the association information includes the first indication information, the user plane network element determines, based on the client operation indicated by the first indication information and a first correspondence, a QoS flow corresponding to the client operation, where different client operations correspond to different QoS flows, and the first correspondence is a correspondence between a client operation and a QoS flow; and the user plane network element sends the media packet to the access network element via the QoS flow corresponding to the client operation.

In a possible design, with reference to the first aspect or the possible designs of the first aspect, the user plane network element receives the first correspondence from a session management network element.

Based on the foregoing two possible designs, the user plane network element may send, based on the correspondence that is between a client operation and a QoS flow and that is sent by the session management network element, media packets corresponding to different client operations to the access network element via different QoS flows, to implement differentiated transmission of media packets, shorten buffering waiting time when a terminal plays the media packets, and improve user viewing experience.

In a possible design, with reference to the first aspect or the possible designs of the first aspect, when the association information includes the second indication information, and when different priorities correspond to different QoS flows, the user plane network element sends, based on the priority indicated by the second indication information and a second correspondence, the media packet to the access network element via a QoS flow corresponding to the priority, where the second correspondence is a correspondence between a priority corresponding to a client operation and a QoS flow; or when different priorities correspond to a same QoS flow, the user plane network element sends, based on the priority indicated by the second indication information and a second correspondence, the media packet to the access network element based on the priority via the QoS flow, where the second correspondence is a correspondence between a priority corresponding to a client operation and a QoS flow.

In a possible design, with reference to the first aspect or the possible designs of the first aspect, the user plane network element receives the second correspondence from a session management network element.

Based on the foregoing two possible designs, the user plane network element may send, based on the correspondence that is between a priority of a client operation and a QoS flow and that is sent by the session management network element, a media packet corresponding to the priority of the client operation to the access network element via the QoS flow corresponding to the priority, to implement differentiated transmission of media packets, shorten buffering waiting time when a terminal plays the media packets, and improve user viewing experience.

In a possible design, with reference to the first aspect or the possible designs of the first aspect, the user plane network element receives, from the session management network element, third indication information that indicates the user plane network element to determine, after receiving the media packet, the association information corresponding to the media packet; and the user plane network element determines, based on the third indication information and the received media packet, the association information corresponding to the media packet.

Based on this possible design, the user plane network element may determine, based on the received third indication information, that the association information corresponding to the received media packet needs to be determined, so as to determine, in a subsequent data transmission process and based on the received media packet, the association information corresponding to the media packet.

In a possible design, with reference to the first aspect or the possible designs of the first aspect, the user plane network element sends, within a validity period of a timer, the media packet to the access network element via the QoS flow corresponding to the association information.

In a possible design, with reference to the first aspect or the possible designs of the first aspect, the user plane network element receives the timer from the session management network element.

Based on the foregoing two possible designs, the user plane network element may send, within the validity period of the timer and via the QoS flow corresponding to the association information, the media packet to the access network element based on the timer sent by the session management network element. In this way, the media packet is transmitted via different QoS flows in different time periods, so that the user plane network element transmits the media packet more flexibly.

In a possible design, with reference to the first aspect or the possible designs of the first aspect, the client operation includes at least one of the following: initial playing, jumping, normal playing, and pause.

Based on this possible design, the client operation may be the foregoing client operation, or may be another client operation. This is not limited.

According to a second aspect, an embodiment of this application provides a communication apparatus. The communication apparatus may implement functions performed by the user plane network element in the first aspect or the possible designs of the first aspect, and the functions may be implemented by hardware executing corresponding software. The hardware or the software includes one or more modules corresponding to the functions, for example, a receiving module, a processing module, and a sending module.

The receiving module is configured to receive a media packet from an application server.

The processing module is configured to determine association information corresponding to the media packet, where the association information is information associated with a client operation corresponding to the media packet.

The sending module is configured to send the media packet to an access network element via a QoS flow corresponding to the association information.

For a specific implementation of the communication apparatus, refer to a behavior function of the user plane network element in the media packet transmission method provided in any one of the first aspect or the possible designs of the first aspect. According to the communication apparatus described in the second aspect, the user plane network element may determine, based on the received media packet sent by the application server, the association information corresponding to the media packet, and send the media packet to the access network element via the QoS flow corresponding to the association information. Compared with a conventional technology in which a user plane network element sequentially sends media packets to each terminal based on a sequence of media packets sent by an application server, in this embodiment of this application, the user plane network element may send the media packet to the access network element via the QoS flow that corresponds to the association information corresponding to the media packet, to implement differentiated transmission of media packets, shorten buffering waiting time when a terminal plays the media packets, and improve user viewing experience.

In a possible design, with reference to the second aspect, the processing module is configured to identify the media packet that carries the association information, to obtain the association information; the receiving module is configured to receive the association information from the application server; or the processing module is configured to: determine, based on an obtained media packet request for requesting the media packet from the application server, a client operation corresponding to the media packet request, and determine the association information based on the client operation that corresponds to the media packet request corresponding to the media packet.

Based on this possible design, the user plane network element may determine, in any one of the foregoing manners, the association information corresponding to the media packet. This provides a feasible solution for the user plane network element to determine the association information corresponding to the media packet.

In a possible design, with reference to the second aspect or the possible designs of the second aspect, the processing module is configured to: perform application layer identification on the media packet to obtain the association information; perform transport layer identification on the media packet to obtain the association information; or perform network layer identification on the media packet to obtain the association information.

Based on this possible design, the user plane network element may determine, in any one of the foregoing manners, the association information corresponding to the media packet. This provides a feasible solution for the user plane network element to determine the association information corresponding to the media packet.

In a possible design, with reference to the second aspect or the possible designs of the second aspect, the media packet request includes a real time streaming protocol RTSP request, and the processing module is configured to determine, based on the RTSP request, the client operation corresponding to the media packet request; or the media packet request includes an index number of the media packet, and the processing module is configured to determine, based on the index number of the media packet, the client operation corresponding to the media packet request.

Based on this possible design, the user plane network element may determine, based on the RTSP request or the index number of the media packet, the client operation corresponding to the media packet request. This provides a feasible solution for the user plane network element to determine the client operation corresponding to the media packet request.

In a possible design, with reference to the second aspect or the possible designs of the second aspect, the association information includes first indication information, where the first indication information indicates the client operation corresponding to the media packet; or the association information includes second indication information, where the second indication information indicates a priority that corresponds to the client operation corresponding to the media packet.

Based on this possible design, the association information may be the client operation corresponding to the media packet, the priority corresponding to the client operation, other information associated with the client operation on the media packet, or the like. This is not limited.

In a possible design, with reference to the second aspect or the possible designs of the second aspect, when the association information includes the first indication information, the processing module is configured to determine, based on the client operation indicated by the first indication information and a first correspondence, a QoS flow corresponding to the client operation, where different client operations correspond to different QoS flows, and the first correspondence is a correspondence between a client operation and a QoS flow; and the sending module is configured to send the media packet to the access network element via the QoS flow corresponding to the client operation.

In a possible design, with reference to the second aspect or the possible designs of the second aspect, the receiving module is configured to receive the first correspondence from a session management network element.

Based on the foregoing two possible designs, the user plane network element may send, based on the correspondence that is between a client operation and a QoS flow and that is sent by the session management network element, media packets corresponding to different client operations to the access network element via different QoS flows, to implement differentiated transmission of media packets, shorten buffering waiting time when a terminal plays the media packets, and improve user viewing experience.

In a possible design, with reference to the second aspect or the possible designs of the second aspect, when the association information includes the second indication information, and when different priorities correspond to different QoS flows, the sending module is configured to send, based on the priority indicated by the second indication information and a second correspondence, the media packet to the access network element via a QoS flow corresponding to the priority, where the second correspondence is a correspondence between a priority corresponding to a client operation and a QoS flow; or when different priorities correspond to a same QoS flow, the sending module is configured to send, based on the priority indicated by the second indication information and a second correspondence, the media packet to the access network element based on the priority via the QoS flow, where the second correspondence is a correspondence between a priority corresponding to a client operation and a QoS flow.

In a possible design, with reference to the second aspect or the possible designs of the second aspect, the receiving module is configured to receive the second correspondence from a session management network element.

Based on the foregoing two possible designs, the user plane network element may send, based on the correspondence that is between a priority of a client operation and a QoS flow and that is sent by the session management network element, a media packet corresponding to the priority of the client operation to the access network element via the QoS flow corresponding to the priority, to implement differentiated transmission of media packets, shorten buffering waiting time when a terminal plays the media packets, and improve user viewing experience.

In a possible design, with reference to the second aspect or the possible designs of the second aspect, the receiving module is configured to receive, from the session management network element, third indication information that indicates the user plane network element to determine, after receiving the media packet, the association information corresponding to the media packet; and the processing module is configured to determine, based on the third indication information and the received media packet, the association information corresponding to the media packet.

Based on this possible design, the user plane network element may determine, based on the received third indication information, that the association information corresponding to the received media packet needs to be determined, so as to determine, in a subsequent data transmission process and based on the received media packet, the association information corresponding to the media packet.

In a possible design, with reference to the second aspect or the possible designs of the second aspect, the sending module is configured to send, within a validity period of a timer, the media packet to the access network element via the QoS flow corresponding to the association information.

In a possible design, with reference to the second aspect or the possible designs of the second aspect, the receiving module is configured to receive the timer from the session management network element.

Based on the foregoing two possible designs, the user plane network element may send, within the validity period of the timer and via the QoS flow corresponding to the association information, the media packet to the access network element based on the timer sent by the session management network element. In this way, the media packet is transmitted via different QoS flows in different time periods, so that the user plane network element transmits the media packet more flexibly.

In a possible design, with reference to the second aspect or the possible designs of the second aspect, the client operation includes at least one of the following: initial playing, jumping, normal playing, and pause.

Based on this possible design, the client operation may be the foregoing client operation, or may be another client operation. This is not limited.

According to a third aspect, a communication apparatus is provided. The communication apparatus may be a user plane network element, or a chip or a system-on-a-chip in the user plane network element. The communication apparatus may implement functions performed by the user plane network element in the foregoing aspects or the possible designs, and the functions may be implemented by hardware. In a possible design, the communication apparatus may include a transceiver and a processor. The transceiver and the processor may be configured to support the communication apparatus in implementing the function in any one of the first aspect or the possible designs of the first aspect. For example, the transceiver may be configured to receive a media packet from an application server, and the processor may be configured to determine association information corresponding to the media packet. The association information is information associated with a client operation corresponding to the media packet. The transceiver may be further configured to send the media packet to an access network element via a QoS flow corresponding to the association information. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the media packet transmission method according to any one of the first aspect or the possible designs of the first aspect.

For a specific implementation of the communication apparatus, refer to a behavior function of the user plane network element in the media packet transmission method provided in any one of the first aspect or the possible designs of the first aspect.

According to a fourth aspect, a communication apparatus is provided. The communication apparatus includes one or more processors and one or more memories, the one or more memories are coupled to the one or more processors, and the one or more memories are configured to store computer program code or computer instructions. When the one or more processors execute the computer instructions, the communication apparatus is enabled to perform the media packet transmission method according to any one of the first aspect or the possible designs of the first aspect.

According to a fifth aspect, a computer-readable storage medium is provided. The computer-readable storage medium stores computer instructions or a program. When the computer instructions or the program is run on a computer, the computer is enabled to perform the media packet transmission method according to any one of the first aspect or the possible designs of the first aspect.

According to a sixth aspect, a computer program product including instructions is provided. When the computer program product runs on a computer, the computer is enabled to perform the media packet transmission method according to any one of the first aspect or the possible designs of the first aspect.

According to a seventh aspect, a chip system is provided. The chip system includes one or more processors and one or more memories, the one or more memories are coupled to the one or more processors, and the one or more memories store computer program code or computer instructions. When the one or more processors execute the computer program code or the computer instructions, the chip system is enabled to perform the media packet transmission method according to any one of the first aspect or the possible designs of the first aspect.

For technical effects achieved by any one of the design manners of the third aspect to the seventh aspect, refer to the technical effects achieved by any one of the possible designs of the first aspect and the second aspect. Details are not described again.

According to an eighth aspect, a media packet transmission method is provided. The method includes: A session management network element sends, to a user plane network element, third indication information that indicates the user plane network element to determine, after receiving a media packet, association information corresponding to the media packet, so that the user plane network element determines, based on the third indication information and the received media packet, the association information corresponding to the media packet, and sends the media packet to an access network element via a QoS flow corresponding to the association information, where the association information is information associated with a client operation corresponding to the media packet.

Based on the eighth aspect, in this embodiment of this application, the session management network element may send the third indication information to the user plane network element, so that the user plane network element determines, based on the third indication information, the association information corresponding to the received media packet, and sends the media packet to the access network element via the QoS flow corresponding to the association information. Compared with a conventional technology in which a user plane network element sequentially sends media packets to each terminal based on a sequence of media packets sent by an application server, in this embodiment of this application, the user plane network element may send, based on the third indication information, the media packet to the access network element via the QoS flow that corresponds to the association information corresponding to the media packet, to implement differentiated transmission of media packets, shorten buffering waiting time when a terminal plays the media packets, and improve user viewing experience.

In a possible design, with reference to the eighth aspect, the session management network element receives a client operation and a QoS parameter corresponding to the client operation from a policy control network element, determines, based on the QoS parameter corresponding to the client operation, a QoS flow corresponding to the QoS parameter, and sends a correspondence between the client operation and the QoS flow to the user plane network element as a first correspondence.

Based on this possible design, the session management network element may send the first correspondence to the user plane network element, so that the user plane network element determines, based on the first correspondence, the QoS flow that corresponds to the client operation corresponding to the media packet, and sends the media packet to the access network element via the QoS flow, to implement differentiated transmission of media packets.

In a possible design, with reference to the eighth aspect, the session management network element receives a client operation and a QoS parameter corresponding to the client operation from a policy control network element, determines, based on the QoS parameter corresponding to the client operation, a QoS flow corresponding to the QoS parameter, determines, based on the QoS parameter corresponding to the client operation, a priority corresponding to the client operation, and sends a correspondence between the priority corresponding to the client operation and the QoS flow to the user plane network element as a second correspondence.

Based on this possible design, the session management network element may send the second correspondence to the user plane network element, so that the user plane network element determines, based on the second correspondence, the QoS flow that corresponds to the priority corresponding to the client operation corresponding to the received media packet, and sends the media packet to the access network element via the QoS flow, to implement differentiated transmission of media packets.

In a possible design, with reference to the eighth aspect, the session management network element obtains a client operation and a QoS parameter corresponding to the client operation, and the session management network element sends the client operation and the QoS parameter corresponding to the client operation to a policy control network element. Alternatively, the session management network element obtains a client operation and a QoS parameter corresponding to the client operation, the session management network element determines, based on the QoS parameter corresponding to the client operation, a priority corresponding to the client operation, and the session management network element sends the client operation and the priority corresponding to the client operation to a policy control network element.

Based on this possible design, the session management network element may send the foregoing information to the policy control network element, so that the policy control network element forwards the received information to the application server through an application function network element. In this way, the application server determines, based on the foregoing information, the association information corresponding to the media packet, includes the association information in the media packet, and sends the media packet to the user plane network element, so that the user plane network element implements differentiated transmission of media packets based on association information of the media packets, to shorten buffering waiting time when a terminal plays the media packets, and improve user viewing experience.

According to a ninth aspect, an embodiment of this application provides a communication apparatus. The communication apparatus may implement functions performed by the session management network element in the eighth aspect or the possible designs of the eighth aspect, and the functions may be implemented by hardware executing corresponding software. The hardware or the software includes one or more modules corresponding to the functions, for example, a sending module.

The sending module is configured to send, to a user plane network element, third indication information that indicates the user plane network element to determine, after receiving a media packet, association information corresponding to the media packet, so that the user plane network element determines, based on the third indication information and the received media packet, the association information corresponding to the media packet, and sends the media packet to an access network element via a QoS flow corresponding to the association information, where the association information is information associated with a client operation corresponding to the media packet.

For a specific implementation of the communication apparatus, refer to a behavior function of the session management network element in the media packet transmission method provided in any one of the eighth aspect or the possible designs of the eighth aspect. According to the communication apparatus described in the ninth aspect, the session management network element may send the third indication information to the user plane network element, so that the user plane network element determines, based on the third indication information, the association information corresponding to the received media packet, and sends the media packet to the access network element via the QoS flow corresponding to the association information. Compared with a conventional technology in which a user plane network element sequentially sends media packets to each terminal based on a sequence of media packets sent by an application server, in this embodiment of this application, the user plane network element may send, based on the third indication information, the media packet to the access network element via the QoS flow that corresponds to the association information corresponding to the media packet, to implement differentiated transmission of media packets, shorten buffering waiting time when a terminal plays the media packets, and improve user viewing experience.

In a possible design, with reference to the ninth aspect, the communication apparatus further includes a receiving module and a processing module. The receiving module is configured to receive a client operation and a QoS parameter corresponding to the client operation from a policy control network element. The processing module is configured to determine, based on the QoS parameter corresponding to the client operation, a QoS flow corresponding to the QoS parameter. The sending module is further configured to send a correspondence between the client operation and the QoS flow to the user plane network element as a first correspondence.

Based on this possible design, the session management network element may send the first correspondence to the user plane network element, so that the user plane network element determines, based on the first correspondence, the QoS flow that corresponds to the client operation corresponding to the media packet, and sends the media packet to the access network element via the QoS flow, to implement differentiated transmission of media packets.

In a possible design, with reference to the ninth aspect or the possible designs of the ninth aspect, the receiving module is configured to receive a client operation and a QoS parameter corresponding to the client operation from a policy control network element. The processing module is configured to determine, based on the QoS parameter corresponding to the client operation, a QoS flow corresponding to the QoS parameter. The processing module is configured to determine, based on the QoS parameter corresponding to the client operation, a priority corresponding to the client operation. The sending module is configured to send a correspondence between the priority corresponding to the client operation and the QoS flow to the user plane network element as a second correspondence.

Based on this possible design, the session management network element may send the second correspondence to the user plane network element, so that the user plane network element determines, based on the second correspondence, the QoS flow that corresponds to the priority corresponding to the client operation corresponding to the received media packet, and sends the media packet to the access network element via the QoS flow, to implement differentiated transmission of media packets.

In a possible design, with reference to the ninth aspect or the possible designs of the ninth aspect, the receiving module is configured to obtain a client operation and a QoS parameter corresponding to the client operation, and the sending module is configured to send the client operation and the QoS parameter corresponding to the client operation to a policy control network element. Alternatively, the receiving module is configured to obtain a client operation and a QoS parameter corresponding to the client operation, the processing module is configured to determine, based on the QoS parameter corresponding to the client operation, a priority corresponding to the client operation, and the sending module is configured to send the client operation and the priority corresponding to the client operation to a policy control network element.

Based on this possible design, the session management network element may send the foregoing information to the policy control network element, so that the policy control network element forwards the received information to the application server through an application function network element. In this way, the application server determines, based on the foregoing information, the association information corresponding to the media packet, includes the association information in the media packet, and sends the media packet to the user plane network element, so that the user plane network element implements differentiated transmission of media packets based on association information of the media packets, to shorten buffering waiting time when a terminal plays the media packets, and improve user viewing experience.

According to a tenth aspect, a communication apparatus is provided. The communication apparatus may be a session management network element, or a chip or a system-on-a-chip in the session management network element. The communication apparatus may implement functions performed by the session management network element in the foregoing aspects or the possible designs, and the functions may be implemented by hardware. In a possible design, the communication apparatus may include a transceiver. The transceiver may be configured to support the communication apparatus in implementing the function in any one of the eighth aspect or the possible designs of the eighth aspect. For example, the transceiver may be configured to send, to a user plane network element, third indication information that indicates the user plane network element to determine, after receiving a media packet, association information corresponding to the media packet, so that the user plane network element determines, based on the third indication information and the received media packet, the association information corresponding to the media packet, and sends the media packet to an access network element via a QoS flow corresponding to the association information, where the association information is information associated with a client operation corresponding to the media packet. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the media packet transmission method according to any one of the eighth aspect or the possible designs of the eighth aspect.

For a specific implementation of the communication apparatus, refer to a behavior function of the session management network element in the media packet transmission method provided in any one of the eighth aspect or the possible designs of the eighth aspect.

According to an eleventh aspect, a communication apparatus is provided. The communication apparatus includes one or more processors and one or more memories, the one or more memories are coupled to the one or more processors, and the one or more memories are configured to store computer program code or computer instructions. When the one or more processors execute the computer instructions, the communication apparatus is enabled to perform the media packet transmission method according to any one of the eighth aspect or the possible designs of the eighth aspect.

According to a twelfth aspect, a computer-readable storage medium is provided. The computer-readable storage medium stores computer instructions or a program. When the computer instructions are run or the program runs on a computer, the computer is enabled to perform the media packet transmission method according to any one of the eighth aspect or the possible designs of the eighth aspect.

According to a thirteenth aspect, a computer program product including instructions is provided. When the computer program product runs on a computer, the computer is enabled to perform the media packet transmission method according to any one of the eighth aspect or the possible designs of the eighth aspect.

According to a fourteenth aspect, a chip system is provided. The chip system includes one or more processors and one or more memories, the one or more memories are coupled to the one or more processors, and the one or more memories store computer program code or computer instructions. When the one or more processors execute the computer program code or the computer instructions, the chip system is enabled to perform the media packet transmission method according to any one of the eighth aspect or the possible designs of the eighth aspect.

For technical effects achieved by any one of the design manners of the tenth aspect to the fourteenth aspect, refer to the technical effects achieved by any one of the possible designs of the eighth aspect and the ninth aspect. Details are not described again.

According to a fifteenth aspect, a media packet transmission method is provided. The method includes: An application server receives, from a user plane network element, a media packet request for requesting a media packet from the application server; and the application server sends the media packet to the user plane network element, so that the user plane network element determines association information corresponding to the media packet, and sends the media packet to an access network element via a QoS flow corresponding to the association information, where the association information is information associated with a client operation corresponding to the media packet.

Based on the fifteenth aspect, the application server may send the media packet that carries the association information to the user plane network element based on the received media packet request, so that the user plane network element sends the media packet to the access network element via the QoS flow corresponding to the association information. Compared with a conventional technology in which a user plane network element sequentially sends media packets to each terminal based on a sequence of media packets sent by an application server, in this embodiment of this application, the user plane network element may send, based on third indication information, the media packet to the access network element via the QoS flow that corresponds to the association information corresponding to the media packet, to implement differentiated transmission of media packets, shorten buffering waiting time when a terminal plays the media packets, and improve user viewing experience.

In a possible design, with reference to the fifteenth aspect, the application server identifies the media packet request to obtain the client operation corresponding to the media packet, determines the association information based on the client operation corresponding to the media packet, and includes the association information in the media packet and sends the media packet to the user plane network element.

Based on this possible design, the application server may determine, based on the media packet request, the client operation corresponding to the media packet, and further include the association information in the media packet and send the media packet to the user plane network element, so that the user plane network element implements differentiated transmission of media packets based on association information, to shorten buffering waiting time when a terminal plays the media packets, and improve user viewing experience.

In a possible design, with reference to the fifteenth aspect or the possible designs of the fifteenth aspect, the application server determines, based on the client operation corresponding to the media packet, first indication information that indicates the client operation corresponding to the media packet, and uses the first indication information as the association information.

In a possible design, with reference to the fifteenth aspect or the possible designs of the fifteenth aspect, the application server receives a client operation and a priority corresponding to the client operation from a policy control network element through an application function network element. The application server determines, based on the client operation corresponding to the media packet and the priority corresponding to the client operation, second indication information that indicates the priority that corresponds to the client operation corresponding to the media packet. The application server uses the second indication information as the association information.

In a possible design, with reference to the fifteenth aspect or the possible designs of the fifteenth aspect, the application server receives a client operation and a QoS parameter corresponding to the client operation from a policy control network element through an application function network element. The application server determines, based on the client operation corresponding to the media packet and the QoS parameter corresponding to the client operation, fourth indication information that indicates the QoS parameter that corresponds to the client operation corresponding to the media packet, and uses the fourth indication information as the association information.

Based on the foregoing three possible designs, the application server may use the first indication information, the second indication information, or the fourth indication information as the association information. Certainly, the application server may further use other information associated with the client operation as the association information. This is not limited.

According to a sixteenth aspect, an embodiment of this application provides a communication apparatus. The communication apparatus may implement functions performed by the application server in the fifteenth aspect or the possible designs of the fifteenth aspect, and the functions may be implemented by hardware executing corresponding software. The hardware or the software includes one or more modules corresponding to the functions, for example, a receiving module and a sending module.

The receiving module is configured to receive, from a user plane network element, a media packet request for requesting a media packet from an application server.

The sending module is configured to send the media packet to the user plane network element, so that the user plane network element determines association information corresponding to the media packet, and sends the media packet to an access network element via a QoS flow corresponding to the association information, where the association information is information associated with a client operation corresponding to the media packet.

For a specific implementation of the communication apparatus, refer to a behavior function of the application server in the media packet transmission method provided in any one of the fifteenth aspect or the possible designs of the fifteenth aspect. According to the communication apparatus described in the sixteenth aspect, the application server may send the media packet that carries the association information to the user plane network element based on the received media packet request, so that the user plane network element sends the media packet to the access network element via the QoS flow corresponding to the association information. Compared with a conventional technology in which a user plane network element sequentially sends media packets to each terminal based on a sequence of media packets sent by an application server, in this embodiment of this application, the user plane network element may send, based on third indication information, the media packet to the access network element via the QoS flow that corresponds to the association information corresponding to the media packet, to implement differentiated transmission of media packets, shorten buffering waiting time when a terminal plays the media packets, and improve user viewing experience.

In a possible design, with reference to the sixteenth aspect, the communication apparatus further includes a processing module. The processing module is configured to identify the media packet request to obtain the client operation corresponding to the media packet. The processing module is further configured to determine the association information based on the client operation corresponding to the media packet. The sending module is further configured to include the association information in the media packet and send the media packet to the user plane network element.

Based on this possible design, the application server may determine, based on the media packet request, the client operation corresponding to the media packet, and further include the association information in the media packet and send the media packet to the user plane network element, so that the user plane network element implements differentiated transmission of media packets based on association information, to shorten buffering waiting time when a terminal plays the media packets, and improve user viewing experience.

In a possible design, with reference to the sixteenth aspect or the possible designs of the sixteenth aspect, the processing module is further configured to: determine, based on the client operation corresponding to the media packet, first indication information that indicates the client operation corresponding to the media packet, and use the first indication information as the association information.

In a possible design, with reference to the sixteenth aspect or the possible designs of the sixteenth aspect, the processing module is further configured to receive a client operation and a priority corresponding to the client operation from a policy control network element through an application function network element. The application server determines, based on the client operation corresponding to the media packet and the priority corresponding to the client operation, second indication information that indicates the priority that corresponds to the client operation corresponding to the media packet. The application server uses the second indication information as the association information.

In a possible design, with reference to the sixteenth aspect or the possible designs of the sixteenth aspect, the receiving module is further configured to receive a client operation and a QoS parameter corresponding to the client operation from a policy control network element through an application function network element. The processing module is further configured to: determine, based on the client operation corresponding to the media packet and the QoS parameter corresponding to the client operation, fourth indication information that indicates the QoS parameter that corresponds to the client operation corresponding to the media packet, and use the fourth indication information as the association information.

Based on the foregoing three possible designs, the application server may use the first indication information, the second indication information, or the fourth indication information as the association information. Certainly, the application server may further use other information associated with the client operation as the association information. This is not limited.

According to a seventeenth aspect, a communication apparatus is provided. The communication apparatus may be an application server, or a chip or a system-on-a-chip in the application server. The communication apparatus may implement functions performed by the user plane network element in the foregoing aspects or the possible designs, and the functions may be implemented by hardware. In a possible design, the communication apparatus may include a transceiver and a processor. The transceiver and the processor may be configured to support the communication apparatus in implementing the function in any one of the fifteenth aspect or the possible designs of the fifteenth aspect. For example, the transceiver may be configured to receive, from the user plane network element, a media packet request for requesting a media packet from the application server. The transceiver may be further configured to send the media packet to the user plane network element, so that the user plane network element determines association information corresponding to the media packet, and sends the media packet to an access network element via a QoS flow corresponding to the association information, where the association information is information associated with a client operation corresponding to the media packet. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the media packet transmission method according to any one of the fifteenth aspect or the possible designs of the fifteenth aspect.

For a specific implementation of the communication apparatus, refer to a behavior function of the application server in the media packet transmission method provided in any one of the fifteenth aspect or the possible designs of the fifteenth aspect.

According to an eighteenth aspect, a communication apparatus is provided. The communication apparatus includes one or more processors and one or more memories, the one or more memories are coupled to the one or more processors, and the one or more memories are configured to store computer program code or computer instructions. When the one or more processors execute the computer instructions, the communication apparatus is enabled to perform the behavior function of the application server in the media packet transmission method provided in any one of the fifteenth aspect or the possible designs of the fifteenth aspect.

According to a nineteenth aspect, a computer-readable storage medium is provided. The computer-readable storage medium stores computer instructions or a program. When the computer instructions are run or the program runs on a computer, the computer is enabled to perform the behavior function of the application server in the media packet transmission method provided in any one of the fifteenth aspect or the possible designs of the fifteenth aspect.

According to a twentieth aspect, a computer program product including instructions is provided. When the computer program product runs on a computer, the computer is enabled to perform the behavior function of the application server in the media packet transmission method provided in any one of the fifteenth aspect or the possible designs of the fifteenth aspect.

According to a twenty-first aspect, a chip system is provided. The chip system includes one or more processors and one or more memories, the one or more memories are coupled to the one or more processors, and the one or more memories store computer program code or computer instructions. When the one or more processors execute the computer program code or the computer instructions, the chip system is enabled to perform the behavior function of the application server in the media packet transmission method provided in any one of the fifteenth aspect or the possible designs of the fifteenth aspect.

For technical effects achieved by any one of the design manners of the seventeenth aspect to the twenty-first aspect, refer to the technical effects achieved by any one of the possible designs of the fifteenth aspect and the sixteenth aspect. Details are not described again.

According to a twenty-second aspect, a communication system is provided. The communication system includes the communication apparatus according to any one of the second aspect and the third aspect, the communication apparatus according to any one of the ninth aspect and the tenth aspect, and the communication apparatus according to any one of the fifteenth aspect and the sixteenth aspect.

### BRIEF DESCRIPTION OF DRAWINGS

FIG. 1a is a schematic diagram of a communication system according to an embodiment of this application;
FIG. 1b is a schematic diagram of a 5G communication system according to an embodiment of this application;
FIG. 2 is a diagram of a composition structure of a communication apparatus according to an embodiment of this application;
FIG. 3 is a flowchart of a media packet transmission method according to an embodiment of this application;
FIG. 4 is a flowchart of a media packet transmission method according to an embodiment of this application;
FIG. 5 is a flowchart of a media packet transmission method according to an embodiment of this application;
FIG. 6 is a schematic composition diagram of a communication apparatus according to an embodiment of this application;
FIG. 7 is a schematic composition diagram of a communication apparatus according to an embodiment of this application; and
FIG. 8 is a schematic composition diagram of a communication apparatus according to an embodiment of this application.

### DESCRIPTION OF EMBODIMENTS

The following describes implementations of embodiments of this application in detail with reference to accompanying drawings in this specification.

Currently, in a conventional technology, when sending a media packet to each terminal, a user plane network element may send the media packet to each terminal based on a sequence of media packets sent by an application server. When a terminal obtains a media packet, the user plane network element can send the media packet to the terminal only after sending a media packet before the media packet corresponding to the terminal. Consequently, when playing the media packet, the terminal waits for long buffering time.

To resolve this problem, an embodiment of this application provides a media packet transmission method. A user plane network element may determine, based on a received media packet sent by an application server, association information corresponding to the media packet, where the association information is information associated with a client operation corresponding to the media packet, and send the media packet to an access network element via a QoS flow corresponding to the association information. Compared with the conventional technology in which a user plane network element sequentially sends media packets to each terminal based on a sequence of media packets sent by an application server, in this embodiment of this application, the user plane network element may send the media packet to the access network element via the QoS flow that corresponds to the association information corresponding to the media packet, to implement differentiated transmission of media packets, shorten buffering waiting time when a terminal plays the media packets, and improve user viewing experience.

The following describes implementations of embodiments of this application in detail with reference to accompanying drawings in this specification.

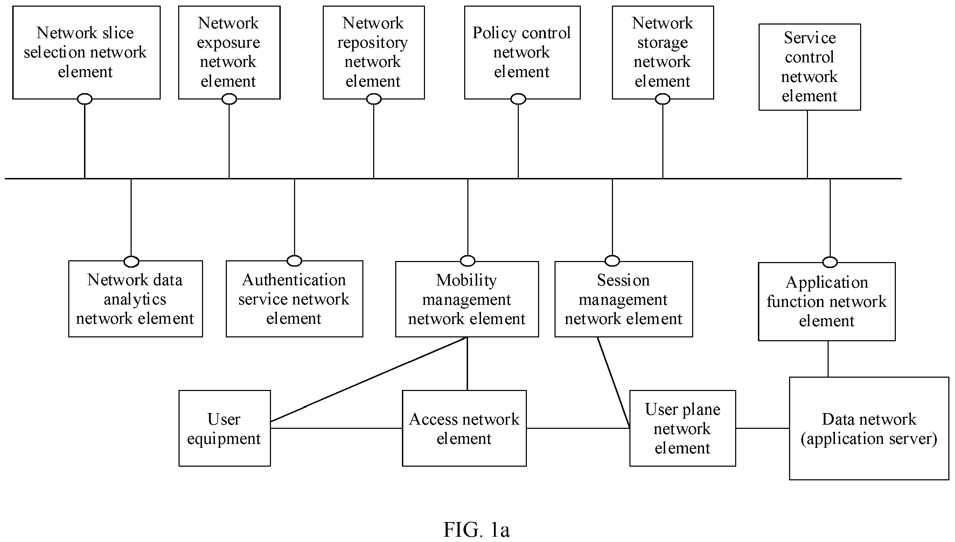

A media packet transmission method provided in embodiments of this application may be used for any communication system. The communication system may be a third generation partnership project (third generation partnership project, 3GPP) communication system, for example, a long term evolution (long term evolution, LTE) system; or may be a fifth generation (fifth generation, 5G) mobile communication system, a new radio (new radio, NR) system, an NR V2X system, or another next-generation communication system; or may be a non-3GPP communication system. This is not limited. The media packet transmission method provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communications (massive machine type communications, mMTC), device-to-device (device-to-device, D2D), vehicle to everything (vehicle to everything, V2X), vehicle to vehicle (vehicle to vehicle, V2V), and internet of things (internet of things, IoT). The following uses FIG. 1a as an example to describe the media packet transmission method according to an embodiment of this application.

FIG. 1a is a schematic diagram of a communication system according to an embodiment of this application. As shown in FIG. 1a, the communication system may include at least one user equipment, an access network element, a mobility management network element, a session management network element, a policy control network element, a user plane network element, an application function network element, and a data network (data network, DN).

The user equipment in FIG. 1a may be located in a cell coverage area of the access network element. The user equipment may perform air interface communication with the access network element over an uplink (uplink, UL). In a UL direction, the user equipment sends data to the access network element, the access network element forwards the received data to a core network element, and the core network element processes the data and sends the processed data to an application server through an N6 interface. In a DL direction, the application server sends downlink data to the core network element, the core network element processes the data and sends the processed data to an access network element through an N3 interface, and the access network element processes the data and sends the processed data to the user equipment through an air interface. For example, the user equipment sends uplink data to the access network element in the UL direction through a physical uplink shared channel (physical sidelink share channel, PUSCH), the access network element forwards the received uplink data to the core network element, and the core network element processes the uplink data and sends the processed uplink data to the application server through the N6 interface. The access network element that forwards the uplink data from the user equipment to the core network element and the access network element that forwards the downlink data from the core network element to the user equipment may be a same access network element, or may be different access network elements.

Alternatively, the user equipment may communicate with the core network element through a specific interface. For example, the user equipment may communicate, through an N1 interface, with an access and mobility management network element belonging to the core network element.

After accessing a network, the user equipment may establish a protocol data unit (protocol data unit, PDU) session, access an external data network DN via the PDU session, and interact with an application server deployed in the DN. In FIG. 1a, for different DNs accessed by a user, the network may select, based on a network policy, a user plane network element accessing the DN as an anchor of the PDU session, namely, a protocol data unit anchor (PDU session anchor, PSA), to access the application server through the N6 interface of the PSA. Application servers of a same application may be deployed at a plurality of locations. The network may select, based on an access location of the user equipment, a PSA that is close to the user equipment and that can support the user equipment in accessing the DN, to reduce route recurvation and a network delay.

The user equipment (user equipment, UE) in FIG. 1a may be referred to as a terminal (terminal), a mobile station (mobile station, MS), a mobile terminal (mobile terminal, MT), or the like. Specifically, the user equipment in FIG. 1a may be a mobile phone (mobile phone), a tablet computer, or a computer having a wireless transceiver function. Alternatively, the user equipment may be a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an unmanned aerial vehicle having a UAV-to-UAV (UAV-to-UAV, U2U) communication capability, or the like. This is not limited.

The access network element in FIG. 1a may be any device having a wireless transceiver function, and is mainly configured to implement functions such as a radio physical control function, resource scheduling and radio resource management, radio access control, and mobility management. Specifically, the access network element may be a device supporting wired access, or may be a device supporting wireless access. For example, the access network element may be an access network (access network, AN)/a radio access network (radio access network, RAN) device, where the AN/RAN includes a plurality of 5G-AN/5G-RAN nodes. The 5G-AN/5G-RAN node may be an access point (access point, AP), a NodeB (NodeB, NB), an enhanced NodeB (enhanced NodeB, eNB), a next-generation NodeB (NR NodeB, gNB), a transmission reception point (transmission reception point, TRP), a transmission point (transmission point, TP), another access node, or the like.

The mobility management network element in FIG. 1a is mainly responsible for work such as access authentication and mobility management of the user equipment, and signaling interaction between functional network elements, for example, managing a registration status of a user, a connection status of the user, user registration and network access, tracking area update, user authentication during cell switching, and key security.

The session management network element in FIG. 1a may be referred to as a session management function, a multicast/broadcast service management function (multicast/broadcast-service management function, MB-SMF), a multicast session management network element, or the like. This is not limited. The session management network element is mainly configured to implement a user plane transmission logical channel, for example, a session management function such as establishment, release, and modification of a packet data unit (packet data unit, PDU) session.

The policy control network element in FIG. 1a may be configured to provide a policy for the mobility management network element and the session management network element, for example, a quality of service (quality of service) policy.

The user plane network element in FIG. 1a may be referred to as a PDU session anchor (PSF), a user plane function, or a multicast/broadcast user plane function (multicast/broadcast user plane function, MB-UPF). The user plane network element may be used as an anchor on a user plane transmission logical channel, and is mainly configured to complete functions such as routing and forwarding of user plane data. For example, the user plane network element establishes a channel (namely, the user plane transmission logical channel) to a terminal, forwards a data packet between the terminal and a DN on the channel, and is responsible for data packet filtering, data forwarding, rate control, generation of charging information, and the like for the terminal. A multicast/broadcast (multicast/broadcast, MB) service controller (MB service controller) has service management functions such as group management, security management, and service announcement.

The application function network element in FIG. 1a is mainly an intermediate functional entity that provides interaction between an application server and a network element in a core network. The application server may use the application function network element to dynamically control quality of service and charging of a network, ensure an SLA requirement, obtain running information of a network element in the core network, and the like. In embodiments of this application, the application function network element may be a functional entity deployed by an operator, or may be a functional entity deployed by a service provider. The service provider may be a third-party service provider, or may be a service provider inside the operator. This is not limited. The application function network element and the application server may be deployed together or separately. A specific deployment manner of the application function network element and the application server is not limited in this application.

The data network DN in FIG. 1a may be an operator network that provides a data transmission service for a user, for example, may be an operator network that provides an IP multimedia service (IP multi-media service, IMS) for the user. An application server (application server, AS) may be deployed in the DN, and the application server may provide the data transmission service for the user.

It should be noted that the terminal, the access network element, and the core network element in embodiments of this application each may be one or more chips, or may be a system-on-a-chip (system-on-a-chip, SOC), or the like. FIG. 1a is merely an example diagram, and a quantity of devices included in FIG. 1a is not limited. In addition, the communication system may further include other devices in addition to the devices shown in FIG. 1a. Names of the devices and the links in FIG. 1a are not limited. In addition to the names shown in FIG. 1a, the devices and the links may have other names. In addition to the network elements shown in FIG. 1a, the network shown in FIG. 1a may further include a network slice selection network element, a network repository network element, an authentication service network element, a network storage network element, a network data analytics network element, a network exposure network element, and the like. This is not limited.

Specifically, the communication system shown in FIG. 1a may be a 3rd generation partnership project (3rd generation partnership project, 3GPP) communication system, for example, a long term evolution (long term evolution, LTE) communication system, a 4th generation (4th generation, 4G) communication system, a 5th generation (5th generation, 5G) communication system or a new radio (new radio, NR) communication system, or may be a non-3GPP communication system. This is not limited.

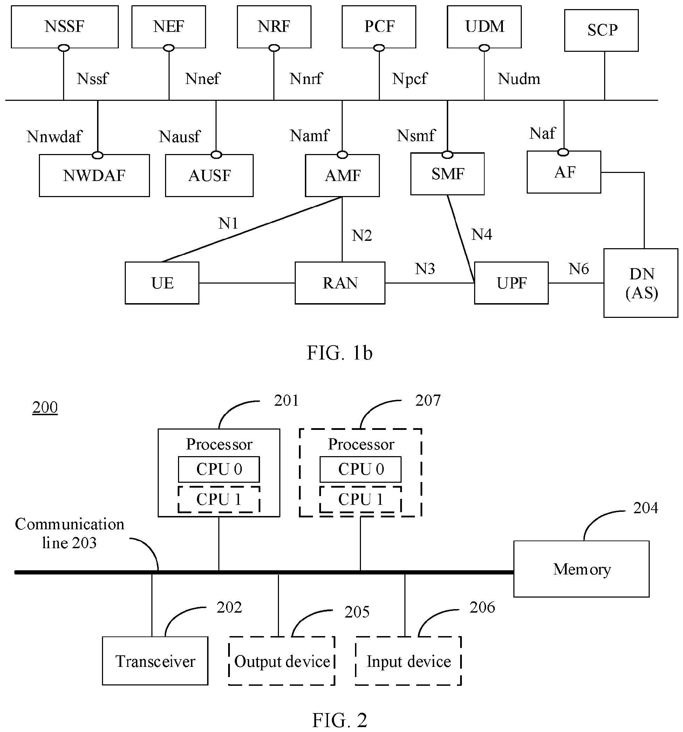

For example, the communication system shown in FIG. 1a is a 5G communication system. In FIG. 1b, a network element or an entity corresponding to the access network element may be a radio access network (radio access network, RAN) in the 5G communication system. A network element or an entity corresponding to the mobility management network element may be an access and mobility management function (access and mobility management function, AMF) in the 5G communication system. A network element or an entity corresponding to the session management network element may be a session management function (session management function, SMF) in the 5G communication system. The policy control network element may be a policy control function (policy control function, PCF) in the 5G communication system. A network element or an entity corresponding to the user plane network element may be a user plane function (user plane function, UPF) in the 5G communication system. A network element or an entity corresponding to the application function network element may be an application function (application function, AF) in the 5G communication system. A network element or an entity corresponding to the network slice selection network element may be a network slice selection function (network slice selection function, NSSF) in the 5G communication system. A network element or an entity corresponding to the network repository network element may be a network repository function (network repository function, NRF) in the 5G communication system. A network element or an entity corresponding to the authentication service network element may be an authentication server function (authentication server function, AUSF) in the 5G communication system. A network element or an entity corresponding to the network storage network element may be an NRF, a unified data repository (unified data repository, UDR), or unified data management (unified data management, UDM) in the 5G communication system. A network element or an entity corresponding to the network data analytics network element may be a network data analytics function (network data analytics function, NWDAF) in the 5G communication system. A network element or an entity corresponding to the network exposure network element may be a network exposure function (network exposure function, NEF) in the 5G communication system. A network element or an entity corresponding to a service control network element may be a service control point (service control point, SCP) in the 5G communication system, or the like.

As shown in FIG. 1b, a terminal communicates with the AMF through a next generation (next generation, N) 1 interface (N1 for short), the RAN device communicates with the AMF through an N2 interface (N2 for short), the RAN device communicates with the UPF through an N3 interface (N3 for short), and the UPF communicates with an application server in a DN through an N6 interface. Core network elements can communicate with each other through service-oriented interfaces. For example, the AMF can communicate with another core network element through an Namf interface. The SMF can communicate with another core network element through an Nsmf interface. The PCF can communicate with another core network element through an Npcf interface. The NSSF can communicate with another core network element through an Nnssf interface. The NEF may communicate with another core network element through an Nnef interface. The NRF may communicate with another core network element through an Nnrf interface. The UDM may communicate with another core network element through an Nudr interface. The NWDAF may communicate with another core network element through an Nnwdaf interface. The AUSF may communicate with another core network element through an Nausf interface.

During specific implementation, in FIG. 1a, for example, each terminal, the access network element, and the core network element may use a composition structure shown in FIG. 2, or include components shown in FIG. 2. FIG. 2 is a schematic composition diagram of a communication apparatus 200 according to an embodiment of this application. The communication apparatus 200 may be a terminal or a chip or a system-on-a-chip in the terminal, may be an access network element or a chip or a system-on-a-chip in the access network element, or may be a core network element or a chip or a system-on-a-chip in the core network element. As shown in FIG. 2, the communication apparatus 200 includes a processor 201, a transceiver 202, and a communication line 203.

Further, the communication apparatus 200 may further include a memory 204. The processor 201, the memory 204, and the transceiver 202 may be connected through the communication line 203.

The processor 201 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 201 may be another apparatus having a processing function, for example, a circuit, a component, or a software module. This is not limited.

The transceiver 202 is configured to communicate with another device or another communication network. The another communication network may be an Ethernet, a radio access network (radio access network, RAN), a wireless local area network (wireless local area network, WLAN), or the like. The transceiver 202 may be a module, a circuit, a transceiver, or any apparatus that can implement communication.

The communication line 203 is configured to transmit information between the components included in the communication apparatus 200.

The memory 204 is configured to store instructions. The instructions may be a computer program.

The memory 204 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or the like. This is not limited.

It should be noted that the memory 204 may exist independently of the processor 201, or may be integrated with the processor 201. The memory 204 may be configured to store instructions, program code, some data, or the like. The memory 204 may be located inside the communication apparatus 200, or may be located outside the communication apparatus 200. This is not limited. The processor 201 is configured to execute the instructions stored in the memory 204, to implement the media packet transmission method provided in the following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device, for example, a keyboard, a mouse, a microphone, or a joystick, and the output device 205 is a device, for example, a display screen or a speaker (speaker).

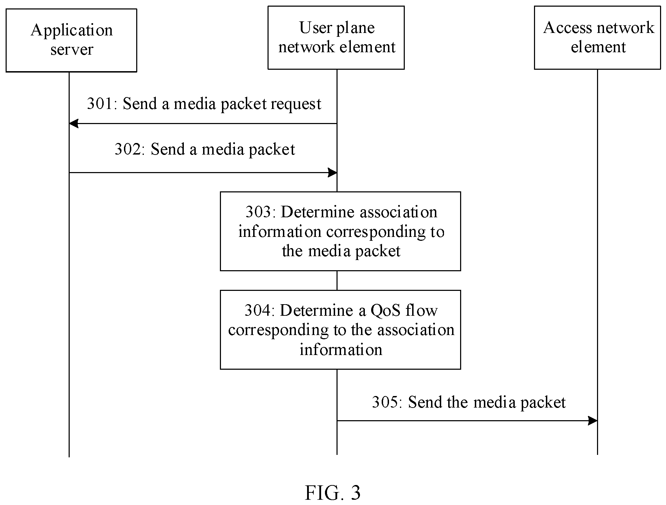

It should be noted that the communication apparatus 200 may be a desktop computer, a portable computer, a network server, a mobile phone, a tablet computer, a wireless terminal, an embedded device, a chip system, or a device having a structure similar to that in FIG. 2. In addition, the composition structure shown in FIG. 3 does not constitute a limitation on the communication apparatus. In addition to the components shown in FIG. 2, the communication apparatus may include more or fewer components than those shown in the figure, some components may be combined, or different component arrangements may be used.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Another name may alternatively be used during specific implementation. This is not limited.

With reference to the communication system shown in FIG. 1a, the following describes the media packet transmission method provided in embodiments of this application. The user plane network element may be any user plane network element in the communication system, the application server may be any application server in the communication system, and the access network element may be any access network element in the communication system. The user plane network element, the application server, the access network element, the session management network element, the policy control network element, and the terminal described in the following embodiments may have the components shown in FIG. 2.

FIG. 3 is a flowchart of a media packet transmission method according to an embodiment of this application. As shown in FIG. 3, the method may include the following steps.

Step 301: A user plane network element sends a media packet request to an application server. Correspondingly, the application server receives the media packet request.

The user plane network element may be a user plane network element corresponding to a PDU session established by a terminal, or may be an anchor of a PDU session established by a terminal. The terminal may be any terminal in the system shown in FIG. 1a. The terminal may send, to the user plane network element via the PDU session, the media packet request that is sent to the application server, and the user plane network element sends the media packet request to the application server. After receiving the media packet request, the application server determines a media packet based on the media packet request, and sends the determined media packet to the user plane network element, so that the user plane network element sends the received media packet to the terminal via the PDU session. It should be noted that before performing this embodiment of this application, the terminal has established the PDU session with reference to a conventional technology. Details are not described herein.

The media packet request is for requesting to obtain the media packet.

In a possible design, the media packet request includes identification information of the media packet, and the identification information of the media packet may be an index number of the media packet or other information that identifies the media packet, so that the application server determines, based on the identification information of the media packet, the media packet corresponding to the media packet request.

For example, using the dynamic adaptive streaming over hypertext transfer protocol (dynamic adaptive streaming over hypertext transfer protocol, DASH) protocol as an example, the terminal may interact with the application server in the following manner: When requesting the media packet, the terminal may obtain a media presentation description (media presentation description, MPD) from the application server. The MPD may include one or more time-continuous and non-overlapping media time periods (periods), and each time period may include one or more adaption sets (adaption sets) of a segment of media content. The time period may further include a start time point and duration. The adaption set may include a group of bitstreams (representation) that have different bit rates and that can be switched. Each bitstream describes a plurality of attributes of media content, including bandwidth, a resolution, a bit rate, and the like. Specifically, the bitstream may include one or more segments (segments). Each segment is a segment file of actual media content, and the terminal may obtain media content corresponding to a corresponding segment via a media packet request (hypertext transfer protocol get, HTTP GET). The media packet request may include information such as a uniform resource locator (uniform resource locator, URL), bandwidth, a resolution, a bit rate, or a time period of a media segment. In other words, the identification information of the media packet may be a time period, a start time point, a URL, or the like, which is not limited.

In another possible design, the media packet request includes a real time streaming protocol (real time streaming protocol, RTSP) request, and the application server determines, based on the real time streaming protocol RTSP request, the media packet corresponding to the media packet request.

Specifically, an RTSP session may be established and negotiated between the terminal and the application server, and the media packet is transmitted via the RTSP session, to implement real time control and on-demand playing of the media packet. The RTSP session does not transmit the media packet, and transmission of the media packet depends on a service provided by a lower-layer transport protocol (for example, the real-time transport protocol (realtime transport protocol, RTP) or the real-time transport control protocol (realtime transport control protocol, RTCP)).

During transmission of the media packet, the terminal may send different RTSP requests to the application server based on different client operations of a user. The client operation may be an operation performed by the user on video playing software in the terminal, and the client operation may include at least one of the following: initial playing, jumping, normal playing, and pause.

For example, if the client operation is initial playing, the terminal may send an RTSP request including an initial playing request to the application server. Optionally, the initial playing request may include a time range corresponding to the media packet, and the application server transmits, based on the time range, the media packet corresponding to the time range. The initial playing may be that the terminal requests, from the application server for the first time, a media packet corresponding to a video, in other words, the initial playing may be considered as that the application server transmits, to the terminal for the first time, a media packet corresponding to a video. It should be noted that the time range may alternatively be replaced with descriptions such as a start time point or duration. This is not limited.

For example, the initial playing request may include a time range 00:00 to 45:20, and the application server may start transmission from a media packet corresponding to 00:00 until transmission of a media packet corresponding to 45:20 is completed.

If the client operation of the user is jumping, the terminal may send an RTSP request including a jumping request to the application server. Optionally, the jumping request may include a time point corresponding to a media packet that needs to be jumped to, and the application server starts, based on the time point, transmission from the media packet corresponding to the time point until the transmission ends. It should be noted that the time point may alternatively be replaced with descriptions such as a start time point or duration. This is not limited.

For example, duration of a video is 45 minutes and 20 seconds. Assuming that the application server receives the jumping request when transmitting a media packet corresponding to 08:20, and a time point corresponding to the jumping request is 20:40, the application server starts to transmit, to the terminal based on the jumping request, media packets corresponding to 20:40 to 45:20.

If the client operation of the user is normal playing, the terminal may send an RTSP request including a normal playing request to the application server. Optionally, the normal playing request may include a time range corresponding to media packets, and the application server transmits, based on the time range, the media packets corresponding to the time range. It should be noted that the time range may alternatively be replaced with descriptions such as a start time point or duration. This is not limited.

For example, duration of a video is 45 minutes and 20 seconds. Assuming that the application server receives the normal playing request when transmitting a media packet corresponding to 08:20, and a time range corresponding to the normal playing request is 08:21 to 20:50, the application server transmits, to the terminal based on the normal playing request, media packets corresponding to 08:21 to 20:50. When transmitting a media packet corresponding to 20:50, the application server receives a normal playing request whose time range is 20:51 to 45:20, and transmits media packets corresponding to 20:51 to 45:20 to the terminal.

If the client operation is pause, the terminal may send an RTSP request including a pause request to the application server, to indicate the application server to temporarily stop transmitting the media packet. The application server may continue to transmit the media packet to the terminal after receiving the foregoing normal playing request or jumping request. Alternatively, the application server receives a termination request, terminates transmission of the media packet, and releases a resource related to the media packet.

Further, after receiving the media packet request, the user plane network element may identify the media packet request to obtain a client operation corresponding to the media packet request.

Optionally, when the media packet request includes the identification information of the media packet, the user plane network element may determine, based on the identification information of the media packet, a client operation corresponding to the media packet request.

For example, the media packet request includes the index number of the media packet. If the index number of the media packet is an initial value, it may be considered that the client operation corresponding to the media packet request is initial playing. If the index number of the media packet changes abruptly, it may be considered that the client operation corresponding to the media packet request is jumping. If the index number of the media packet changes continuously, it may be considered that the client operation corresponding to the media packet request is normal playing. If the index number of the media packet remains unchanged, it may be considered that the client operation corresponding to the media packet request is pause. The index number may be specifically the time period described in the foregoing DASH protocol.

Alternatively, when the media packet request includes the RTSP request, the user plane network element determines, based on the RTSP request, the client operation corresponding to the media packet request.

Step 302: The application server sends the media packet to the user plane network element. Correspondingly, the user plane network element receives the media packet.

The application server may determine, based on the received media packet request, the media packet corresponding to the media packet request, and send the media packet to the user plane network element.

Further, the application server may identify the media packet request to obtain the client operation corresponding to the media packet, determine, based on the client operation corresponding to the media packet, association information corresponding to the media packet, and include the association information in the media packet and send the media packet to the user plane network element. The association information is information associated with a client operation corresponding to the media packet.

The application server may determine, according to the method in step 301 in which the user plane network element determines, based on a media packet request, a client operation corresponding to the media packet request, the client operation corresponding to the received media packet request, and determine the client operation corresponding to the media packet request as a client operation that corresponds to the media packet corresponding to the media packet request.

Optionally, the application server determines, based on the client operation corresponding to the media packet, first indication information that indicates the client operation corresponding to the media packet, uses the first indication information as the association information, and includes the first indication information in the media packet and sends the media packet to the user plane network element.

Optionally, the application server determines, based on the client operation corresponding to the media packet, second indication information that indicates a priority corresponding to the client operation, uses the second indication information as the association information, and includes the second indication information in the media packet and sends the media packet to the user plane network element.

Further, the application server receives, through an application function network element and a policy control network element, the client operation and the priority corresponding to the client operation that are sent by a session management network element, and determines the second indication information based on the priority corresponding to the client operation.

Optionally, the application server determines, based on the client operation corresponding to the media packet, fourth indication information that indicates a QoS parameter corresponding to the client operation, uses the fourth indication information as the association information, and includes the fourth indication information in the media packet and sends the media packet to the user plane network element.

Further, the application server receives, through an application function network element and a policy control network element, the client operation and the QoS parameter corresponding to the client operation that are sent by a session management network element, and determines the fourth indication information based on the QoS parameter corresponding to the client operation.

Further, the application server may set the foregoing association information for the media packet at an application layer, a transport layer, or a network layer, to indicate the client operation corresponding to the media packet. In other words, a packet header at an application layer, a transport layer, or a network layer of the media packet includes the foregoing association information.

The application server may set the association information for the media packet according to an application layer protocol. The application layer protocol may be the hypertext transfer protocol secure (hypertext transfer protocol secure, HTTPS), the real time streaming protocol (real time streaming protocol, RTSP), or the like. This is not limited. Alternatively, the application server may set the association information for the media packet according to a transport layer protocol. The transport layer protocol may be the transmission control protocol (transmission control protocol, TCP), the multipath TCP (multi-path TCP, MPTCP), or the like. When a packet is transmitted between the user plane network element and the application server according to a tunneling protocol, the transport layer protocol may alternatively be a corresponding tunneling protocol. This is not limited. Alternatively, the application server may set the association information for the media packet according to a network layer protocol. The network layer protocol may be the internet protocol (internet protocol, IP) or the like. This is not limited.

It should be noted that, for the foregoing processes of setting the association information for the media packet at the application layer, the transport layer, or the network layer, refer to processes of setting indication information at an application layer, a transport layer, or a network layer in the conventional technology. Details are not described again.

Alternatively, the application server includes the media packet and the corresponding association information in one message, and sends the message to the user plane network element, or the application server separately sends the media packet and the association information corresponding to the media packet to the user plane network element.

Step 303: The user plane network element determines, based on the media packet, the association information corresponding to the media packet.

The user plane network element may determine, in any one of the following Manner 1 to Manner 3, the association information corresponding to the media packet.

Manner 1: When the media packet carries the association information, the user plane network element identifies the media packet to obtain the association information.

Optionally, the user plane network element performs application layer identification on the media packet to obtain the association information.

Optionally, the user plane network element performs transport layer identification on the media packet to obtain the association information.

Optionally, the user plane network element performs network layer identification on the media packet to obtain the association information.

The association information includes the first indication information, the second indication information, or the fourth indication information.

Manner 2: The user plane network element receives the association information that is of the media packet and that is sent by the application server.

Manner 3: The user plane network element determines the association information based on the client operation that corresponds to the media packet request corresponding to the media packet.

Specifically, the user plane network element may identify the media packet request to obtain the client operation corresponding to the media packet request, and after receiving the media packet corresponding to the media packet request, determine the client operation corresponding to the media packet request as a client operation corresponding to the media packet.

Similarly, the user plane network element may alternatively determine, in the manner in step 302 in which the application server determines association information corresponding to a client operation, the association information that corresponds to the client operation corresponding to the received media packet. Details are not described again.

Further, the user plane network element receives third indication information sent by the session management network element, and determines, based on the third indication information, the association information corresponding to the media packet, where the third indication information indicates the user plane network element to determine, after receiving the media packet, the association information corresponding to the media packet.

That the third indication information indicates the user plane network element to determine, after receiving the media packet, the association information corresponding to the media packet may specifically include: indicating to determine, in the foregoing Manner 1, Manner 2, or Manner 3, the association information corresponding to the media packet.

Step 304: The user plane network element determines, based on the association information, a QoS flow corresponding to the association information.

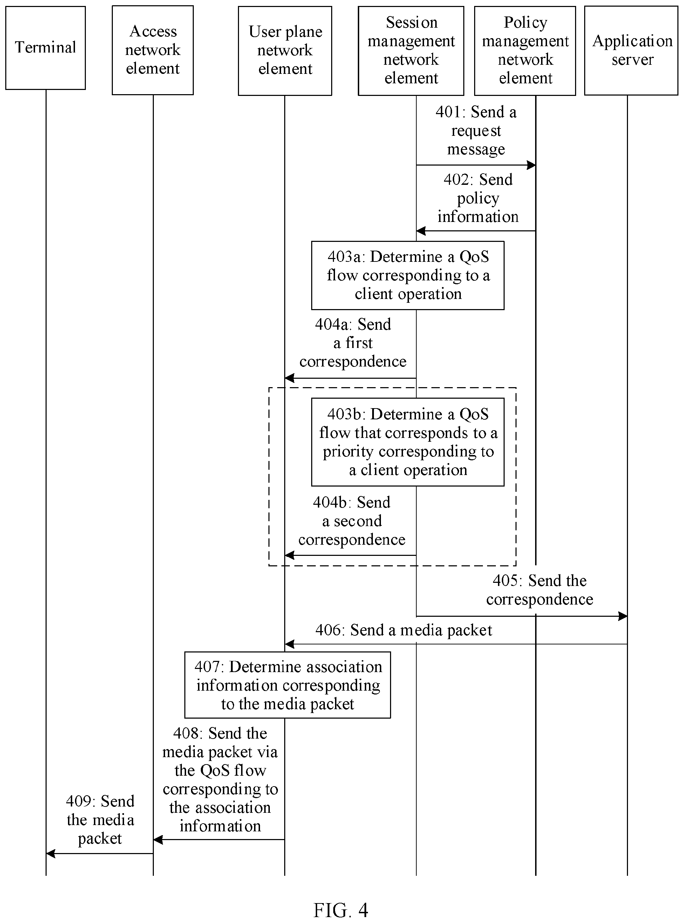

In this embodiment of this application, to meet a QoS requirement of a media service, the association information may be corresponding to a QoS flow that supports transmission of the media packet corresponding to the association information, and the media packet is transmitted via the QoS flow. The QoS flow may be one or more QoS flows corresponding to the PDU session established by the terminal. The QoS flow may be used to transmit a media packet between the terminal and the user plane network element. A QoS parameter of the QoS flow meets a QoS requirement of the media packet transmitted on the QoS flow. For example, when establishing the PDU session for the terminal, the session management network element may establish a QoS flow corresponding to the association information; or after establishing the PDU session for the terminal, the session management network element modifies the PDU session, specifically, modifies or adds a QoS flow for the PDU session, so that the modified or added QoS flow corresponds to the association information, and meets a QoS requirement, for example, a transmission requirement of a media service corresponding to the association information. Specifically, for a process in which the session management network element determines the QoS flow corresponding to the association information, refer to the method shown in FIG. 4.

A correspondence manner between the association information and the QoS flow may be a one-to-one correspondence manner, or may be a many-to-one correspondence manner. This is not limited. It should be noted that a correspondence between the association information and the QoS flow may be alternatively described as a correspondence between the association information and an identifier of the QoS flow. The identifier of the QoS flow may be a quality of service flow identifier (quality of service flow identity, QFI), an allocation and retention priority (allocation retention priority, ARP), a fifth generation mobile communication technology quality of service identifier (fifth-generation mobile networks quality of service identifier, 5QI), or the like. This is not limited.

The many-to-one correspondence manner may be that some association information is corresponding to one QoS flow, and the other association information is corresponding to another QoS flow. Alternatively, in a many-to-one correspondence manner, all association information may be corresponding to a same QoS flow.

When the association information is the first indication information, in other words, the association information is the client operation, and for example, the association information includes initial playing, jumping, normal playing, or pause, initial playing may correspond to a QoS flow 1, jumping corresponds to a QoS flow 2, normal playing corresponds to a QoS flow 3, and pause corresponds to a QoS flow 4. Alternatively, initial playing and jumping correspond to a QoS flow 1, and normal playing or pause corresponds to a QoS flow 2.

When the association information is the second indication information, in other words, the association information is the priority corresponding to the client operation, a correspondence between the client operation and the priority may be a one-to-one correspondence, or may be a many-to-one correspondence.

When the correspondence between the client operation and the priority is a one-to-one correspondence, and for example, a priority of initial playing is high, a priority of jumping is relatively high, a priority of normal playing is medium, and a priority of pause is low, initial playing may correspond to a QoS flow 1, jumping corresponds to a QoS flow 2, normal playing corresponds to a QoS flow 3, and pause corresponds to a QoS flow 4. Alternatively, initial playing and jumping correspond to a QoS flow 1, and normal playing or pause corresponds to a QoS flow 2. Alternatively, initial playing, jumping, normal playing, and pause all correspond to a QoS flow 1.

When the correspondence between the client operation and the priority is a many-to-one correspondence, and for example, a priority of initial playing is high, a priority of jumping is medium, and priorities of normal playing and pause are low, initial playing may correspond to a QoS flow 1, jumping corresponds to a QoS flow 2, and normal playing and pause correspond to a QoS flow 3. Alternatively, initial playing and jumping may correspond to a QoS flow 1, and normal playing and pause may correspond to a QoS flow 2. Alternatively, initial playing, jumping, normal playing, and pause all correspond to a QoS flow 1.

When the association information is the fourth indication information, in other words, the association information is the QoS parameter corresponding to the client operation, a correspondence between the client operation and the QoS parameter may be a one-to-one correspondence, or may be a many-to-one correspondence, and different QoS parameters correspond to different QoS flows.

The correspondence between the association information and the QoS flow may be represented in an array form, a table form, or another form. This is not limited. For example, the association information is the first indication information. It is assumed that the association information includes initial playing, jumping, normal playing, or pause. Initial playing may correspond to the QoS flow 1, jumping corresponds to the QoS flow 2, normal playing corresponds to the QoS flow 3, and pause corresponds to the QoS flow 4. An example in which the correspondence between the association information and the QoS flow is represented in an array form is used, and the correspondence between the association information and the QoS flow includes (initial playing, QoS flow 1), (jumping, QoS flow 2), (normal playing, QoS flow 3), and (pause, QoS flow 4). For example, the correspondence between the association information and the QoS flow is represented in a table form. The correspondence between the association information and the QoS flow may be shown in Table 1.

**Table 1**

| | |
|---|---|
| Initial playing | QoS flow 1 |
| Jumping | QoS flow 2 |
| Normal playing | QoS flow 3 |
| Pause | QoS flow 4 |

Specifically, the user plane network element may determine, in any one of the following Manner 1 to Manner 3, the QoS flow corresponding to the association information.

Manner 1: The QoS flow corresponding to the client operation is determined based on the first indication information and a first correspondence.

The first correspondence is a correspondence between a client operation and a QoS flow.

Optionally, when that different association information corresponds to different QoS flows is that association information corresponding to media packets is in a one-to-one correspondence with QoS flows, the association information is described in detail by using an example in which the association information includes initial playing, jumping, normal playing, or pause, a QoS flow corresponding to initial playing is a QFI 1, a QoS flow corresponding to jumping is a QFI 2, a QoS flow corresponding to normal playing is a QFI 3, and a QoS flow corresponding to pause is a QFI 4. A transmission priority of the QFI 1 corresponding to initial playing may be set to be high, a transmission priority of the QFI 2 corresponding to jumping may be set to be relatively high, a transmission priority of the QFI 3 corresponding to normal playing may be set to be medium, and a transmission priority of the QFI 4 corresponding to pause may be set to be low. In this way, after receiving media packets and performing association information identification, the user plane network element may send, to an access network element via a QoS flow corresponding to the QFI 1, a media packet whose association information is initial playing, send, to the access network element via a QoS flow corresponding to the QFI 2, a media packet whose association information is jumping, send, to the access network element via a QoS flow corresponding to the QFI 3, a media packet whose association information is normal playing, and send, to the access network element via a QoS flow corresponding to the QFI 4, a media packet whose association information is pause.

For example, the user plane network element sequentially receives a media packet 1 that carries first indication information indicating initial playing, a media packet 2 that carries first indication information indicating pause, and a media packet 3 that carries first indication information indicating jumping. The user plane network element may transmit media packets based on QoS flows corresponding to the media packets, rather than transmitting the media packets based on a receiving sequence of the media packets. Because a transmission priority of the QFI 1 corresponding to the media packet 1 is high, a transmission priority of the QFI 4 corresponding to the media packet 2 is low, and a transmission priority of the QFI 2 corresponding to the media packet 3 is relatively high, the user plane network element may first transmit the media packet 1, then transmit the media packet 3, and finally transmit the media packet 2.

Optionally, when that different association information corresponds to different QoS flows is that some association information corresponds to one QoS flow, and the other part of the association information corresponds to another QoS flow, the association information is described in detail by using an example in which the association information includes initial playing, jumping, normal playing, or pause, a QoS flow corresponding to initial playing and jumping is a QFI 1, and a QoS flow corresponding to normal playing and pause is a QFI 2. A transmission priority of the QFI 1 corresponding to initial playing and jumping may be set to be high, and a transmission priority of the QFI 2 corresponding to jumping and normal playing may be set to be low. In this way, after receiving media packets and performing association information identification, the user plane network element may send, to an access network element via a QoS flow corresponding to the QFI 1, a media packet whose association information is initial playing or jumping, and send, to the access network element via a QoS flow corresponding to the QFI 2, a media packet whose association information is normal playing or pause.

For example, the user plane network element sequentially receives a media packet 1 that carries first indication information indicating pause and a media packet 2 that carries first indication information indicating initial playing. The user plane network element may transmit media packets based on QoS flows corresponding to the media packets, rather than transmitting the media packets in a receiving sequence of the media packets. Because a transmission priority of the QFI 2 corresponding to the media packet 1 is low, and a transmission priority of the QFI 1 corresponding to the media packet 2 is high, the user plane network element may first transmit the media packet 2, and then transmit the media packet 1.

It should be noted that, when the user plane network element receives a plurality of media packets carrying same first indication information, for example, when the user plane network element sequentially receives a media packet 11 that carries the first indication information indicating initial playing, a media packet 12 that carries the first indication information indicating initial playing, and a media packet 13 that carries the first indication information indicating initial playing, the user plane network element may transmit media packets based on a receiving sequence of the media packets, to be specific, the user plane network element sequentially transmits the media packet 11, the media packet 12, and the media packet 13 in a receiving sequence.

Because different QoS flows correspond to different QoS parameters, such as a transmission priority, bandwidth, and a latency, after receiving a media packet, the user plane network element may identify the media packet to obtain association information, and send the media packet to the access network element via the QoS flow corresponding to the association information, so that differentiated transmission of media packets may be implemented.

Further, the user plane network element receives the first correspondence from the session management network element.

Manner 2: The QoS flow corresponding to the priority is determined based on the second indication information and a second correspondence.

The second correspondence is a correspondence between a priority corresponding to a client operation and a QoS flow.

Optionally, when that different association information corresponds to different QoS flows is that association information corresponding to media packets is in a one-to-one correspondence with QoS flows, the association information is described in detail by using an example in which the association information includes initial playing, jumping, normal playing, or pause, a priority corresponding to initial playing is high, a priority corresponding to jumping is relatively high, a priority corresponding to normal playing is medium, and a priority corresponding to pause is low. The high priority corresponds to a QFI 1, the relatively high priority corresponds to a QFI 2, the medium priority corresponds to a QFI 3, and the low priority corresponds to a QFI 4. In this way, after receiving media packets and performing association information identification, the user plane network element may send, to an access network element via a QoS flow corresponding to the QFI 1, a media packet whose association information is the high priority, send, to the access network element via a QoS flow corresponding to the QFI 2, a media packet whose association information is the relatively high priority, send, to the access network element via a QoS flow corresponding to the QFI 3, a media packet whose association information is the medium priority, and send, to the access network element via a QoS flow corresponding to the QFI 4, a media packet whose association information is the low priority.

For example, the user plane network element sequentially receives a media packet 1 that carries second indication information indicating a relatively high priority, a media packet 2 that carries second indication information indicating a high priority, and a media packet 3 that carries second indication information indicating a low priority. The user plane network element may transmit media packets based on QoS flows corresponding to the media packets, rather than transmitting the media packets based on a receiving sequence of the media packets. The user plane network element may first transmit the media packet 2, then transmit the media packet 1, and finally transmit the media packet 3.

Optionally, when that different association information corresponds to different QoS flows is that some association information corresponds to one QoS flow, and the other part of the association information corresponds to another QoS flow, the association information is described in detail by using an example in which the association information includes initial playing, jumping, normal playing, or pause, a priority corresponding to initial playing is high, a priority corresponding to jumping is relatively high, and a priority corresponding to normal playing and pause is low. The high priority and the relatively high priority may correspond to the QFI 1, and the medium priority and the low priority may correspond to the QFI 2. In this way, after receiving media packets and performing association information identification, the user plane network element may send, to an access network element via a QoS flow corresponding to the QFI 1, a media packet whose association information is the high priority or the relatively high priority, and send, to the access network element via a QoS flow corresponding to the QFI 2, a media packet whose association information is the medium priority or the low priority.

For example, the user plane network element sequentially receives a media packet 1 that carries second indication information indicating a relatively high priority, a media packet 2 that carries second indication information indicating a high priority, and a media packet 3 that carries second indication information indicating a low priority. The user plane network element may transmit media packets based on QoS flows corresponding to the media packets, rather than transmitting the media packets based on a receiving sequence of the media packets. The user plane network element may first transmit the media packet 2, then transmit the media packet 1, and finally transmit the media packet 3.

It should be noted that, in the foregoing example, when transmitting media packets with different priorities via a same QoS flow, the user plane network element may transmit the media packets based on the priorities corresponding to the media packets. For example, when receiving the media packet 1 that carries second indication information indicating a relatively high priority and the media packet 2 that carries second indication information indicating a high priority, the user plane network element may first transmit the media packet 1, and then transmit the media packet 2.

Optionally, when different association information corresponds to a same QoS flow, the user plane network element may transmit media packets based on priorities corresponding to the media packets.

It should be noted that, when the user plane network element receives a plurality of media packets carrying same second indication information, for example, when the user plane network element sequentially receives a media packet 11 that carries the second indication information indicating the high priority, a media packet 12 that carries the second indication information indicating the high priority, and a media packet 13 that carries the second indication information indicating the high priority, the user plane network element may transmit media packets based on a receiving sequence of the media packets, to be specific, the user plane network element sequentially transmits the media packet 11, the media packet 12, and the media packet 13 in a receiving sequence.

Because different QoS flows correspond to different QoS parameters, such as a transmission priority, bandwidth, and a latency, after receiving a media packet, the user plane network element may identify the media packet to obtain association information, and send the media packet to the access network element via the QoS flow corresponding to the association information, so that differentiated transmission of media packets may be implemented.

Further, the user plane network element receives the second correspondence from the session management network element.

Manner 3: The QoS flow is determined based on the fourth indication information.

Specifically, the user plane network element determines, based on a QoS parameter indicated by the fourth indication information, a QoS flow corresponding to the QoS parameter.

Because different QoS flows correspond to different QoS parameters, such as a transmission priority, bandwidth, and a latency, after receiving a media packet, the user plane network element may identify the media packet to obtain association information, and send the media packet to the access network element via the QoS flow corresponding to the association information, so that differentiated transmission of media packets may be implemented.

Step 305: The user plane network element sends the media packet to the access network element via the QoS flow corresponding to the association information. Correspondingly, the access network element receives the media packet.

Specifically, the user plane network element may perform differentiated transmission on media packets by using the method in step 304. Details are not described again.

Optionally, the user plane network element sends the media packet to the access network element within a validity period of a timer via the QoS flow corresponding to the association information. It may alternatively be described as follows: Within valid time, the user plane network element sends the media packet to the access network element via the QoS flow corresponding to the association information.

For example, all association information corresponds to a same QoS flow. The user plane network element may transmit the media packet via one QoS flow within valid time of a timer 1, transmit the media packet via another QoS flow within valid time of a timer 2, and the like. This is not limited.

The user plane network element may receive a timer sent by the session management network element, or receive, through the session management network element, a timer sent by the policy control network element, or receive, through the session management network element or the policy control network element, a timer sent by the application function network element. This is not limited.

Based on the method shown in FIG. 3, in this embodiment of this application, the user plane network element may determine, based on the received media packet sent by the application server, the association information corresponding to the media packet, and send the media packet to the access network element via the QoS flow corresponding to the association information. Compared with the conventional technology in which a user plane network element sequentially sends media packets to each terminal based on a sequence of media packets sent by an application server, in this embodiment of this application, the user plane network element may send the media packet to the access network element via the QoS flow that corresponds to the association information corresponding to the media packet. For example, in this embodiment of this application, the user plane network element may first transmit a media packet whose client operation is initial playing, then transmit a media packet whose client operation is jumping, then transmit a media packet whose client operation is normal playing, and finally transmit a media packet whose client operation is pause, to implement differentiated transmission of media packets, shorten buffering waiting time when a user whose client operations are initial playing and jumping plays the media packets, and improve user viewing experience.

As shown in FIG. 4, the following describes in detail that the user plane network element obtains the first correspondence or the second correspondence.

FIG. 4 shows a media packet transmission method according to an embodiment of this application. The method includes the following steps.

Step 401: A session management network element sends a request message to a policy control network element. Correspondingly, the policy control network element receives the request message.

The request message may be for requesting to obtain policy information of a media service, and the request message may include a session identifier.

In a possible design, the request message may be a session management policy establishment request (SM policy establishment request). For example, a terminal may send a PDU session establishment request to the session management network element through a mobility management network element, to request to establish a PDU session for the terminal. After receiving the PDU session establishment request, the session management network element sends the SM policy establishment request to the policy control network element.

In another possible design, the request message may be a session management policy modification request (SM policy modification request). For example, the terminal may send, to the session management network element through the mobility management network element, a PDU session modification request that carries identification information of the media service, to request to transmit a media packet of the media service through the PDU session established by the terminal. After receiving the PDU session modification request, the session management network element sends the SM policy modification request to the policy control network element.

Step 402: The policy control network element sends policy information to the session management network element. Correspondingly, the session management network element receives the policy information.

The policy information may be a policy and charging control rule (policy and charging control rule, PCC rule). The policy information includes a client operation corresponding to the media service, a QoS parameter corresponding to the client operation, a priority corresponding to the client operation, or the like. The identification information of the media service indicates the media service, and may specifically be an IP quintuple, or may be an IP triplet, an application identifier, or the like.

In a possible design, when the request message is the SM policy establishment request, the policy information may be carried in a session management policy establishment response (SM policy establishment response).

In another possible design, when the request message is the SM policy modification request, the policy information may be carried in a session management policy modification response (SM policy modification response).

Optionally, the policy control network element may receive the client operation of the media service and a QoS requirement corresponding to the client operation that are sent by an application function network element, and determine, based on the QoS requirement corresponding to the client operation, the QoS parameter corresponding to the client operation or the corresponding priority.

Different client operations may correspond to different requirements; some client operations may correspond to one QoS requirement, and the other client operations may correspond to another QoS requirement; or all client operations correspond to a same QoS requirement.

For example, the client operation includes initial playing, jumping, normal playing, or pause, initial playing may correspond to a QoS requirement 1, jumping may correspond to a QoS requirement 2, normal playing may correspond to a QoS requirement 3, and pause may correspond to a QoS requirement 4; initial playing and jumping may correspond to a QoS requirement 1, normal playing and pause may correspond to a QoS requirement 2; or initial playing, jumping, normal playing, and pause all correspond to a QoS requirement 1.

For example, when initial playing corresponds to the QoS requirement 1, jumping corresponds to the QoS requirement 2, normal playing corresponds to the QoS requirement 3, and pause corresponds to the QoS requirement 4, the QoS parameter that corresponds to the client operation and that is obtained by the policy control network element may be a QoS parameter 1 corresponding to initial playing, a QoS parameter 2 corresponding to jumping, or a QoS parameter 3 corresponding to normal playing.

Further, the policy control network element may determine, based on the QoS parameter corresponding to the client operation, the priority corresponding to the client operation.

Optionally, the client operation of the media service and the QoS parameter corresponding to the client operation are pre-configured in the policy control network element.

Step 403a: The session management network element determines, based on the identification information of the media service, the client operation of the media service, and the QoS parameter corresponding to the client operation that are included in the policy information, a QoS flow corresponding to the client operation.

Specifically, the session management network element may create a new QoS flow, or may modify an existing QoS flow to obtain the QoS flow corresponding to the client operation. This is not limited. In other words, the session management network element creates a QoS flow corresponding to the client operation. When different client operations correspond to different QoS flows, the session management network element needs to create different QoS flows.

For example, the client operation includes initial playing, jumping, normal playing, or pause. When initial playing corresponds to the QoS parameter 1, jumping corresponds to the QoS parameter 2, normal playing corresponds to the QoS parameter 3, and pause corresponds to the QoS parameter 4, the session management network element may determine a QoS flow 1 for initial playing, determine a QoS flow 2 for jumping, determine a QoS flow 3 for normal playing, and determine a QoS flow 4 for pause. In other words, the QoS flow corresponding to the client operation may be a QoS flow 1 corresponding to initial playing, a QoS flow 2 corresponding to jumping, a QoS flow 3 corresponding to normal playing, or a QoS flow 4 corresponding to pause.

Step 404a: The session management network element sends a first correspondence to a user plane network element. Correspondingly, the user plane network element receives the first correspondence.

The session management network element may determine the first correspondence based on step 403a, and send the first correspondence to the user plane network element. The first correspondence is a correspondence between a client operation and a QoS flow.

Alternatively, the foregoing steps 403a and 404a may be replaced with the following steps 403b and 404b.

Step 403b: The session management network element determines, based on the identification information of the media service, the client operation of the media service, the priority corresponding to the client operation, and the QoS parameter corresponding to the client operation that are included in the policy information, a QoS flow that corresponds to the priority corresponding to the client operation.

Similarly, the session management network element may determine, with reference to the manner in step 403a, a QoS flow for the priority corresponding to the client operation. Details are not described again.

Step 404b: The session management network element sends a second correspondence to a user plane network element. Correspondingly, the user plane network element receives the second correspondence.

The session management network element may determine the second correspondence based on step 403b, and send the second correspondence to the user plane network element. The second correspondence is a correspondence between a priority corresponding to a client operation and a QoS flow.

Further, the session management network element sends third indication information to the user plane network element, where the third indication information indicates the user plane network element to determine, after receiving the media packet, the association information corresponding to the media packet.

The association information may be the first indication information, the second indication information, or the fourth indication information in FIG. 3.

Optionally, the session management network element may further send the client operation and the QoS parameter corresponding to the client operation to the user plane network element.

In a possible design, the session management network element sends N4 configuration information to the user plane network element, and correspondingly, the user plane network element receives the N4 configuration information.

The N4 configuration information may be an N4 session establishment (session establishment) request message or an N4 session modification (session modification) message. The N4 configuration information may include a correspondence between a client operation and a QoS flow, a correspondence between a priority corresponding to a client operation and a QoS flow, or a correspondence between a client operation and a QoS parameter, and may further include some existing information, such as a processing policy corresponding to a media service, a packet detection rule (packet detection rule, PDR), a forwarding action rule (forwarding action rule, FAR) associated with the PDR, and a quality of service flow (QoS flow, QF) mapping rule. This is not limited. For related descriptions of the information, refer to a conventional technology. Details are not described again.

It should be noted that the user plane network element may obtain, based on step 401 to step 404a or step 401 to step 404b, the correspondence between the client operation corresponding to the media packet and the QoS flow, the correspondence between the priority corresponding to the client operation and the QoS flow, or the correspondence between the client operation and the QoS parameter.

Further, FIG. 4 may further include the following step 405 to step 409. The application server may obtain, based on the following step 405 to step 409, the client operation corresponding to the media packet, the priority corresponding to the client operation, or the QoS parameter corresponding to the client operation, so that the application server determines, based on the client operation corresponding to the media packet, the association information corresponding to the media packet, and sends the association information corresponding to the media packet to the user plane network element, to enable the user plane network element to implement differentiated transmission of media packets based on association information corresponding to the media packets.

Step 405: The session management network element sends the correspondence to the application server through the policy control network element and the application function network element. Correspondingly, the application server receives the correspondence.

The correspondence may be a correspondence between a client operation and a priority, or may be a correspondence between a client operation and a QoS parameter, so that the application server may determine, based on the received correspondence, the association information corresponding to the media packet. It should be noted that step 405 may be alternatively described as that the session management network element sends the correspondence to the application function network element through the policy control network element. Further, the application function network element sends the correspondence to the application server.

Step 406: The application server sends the media packet to the user plane network element.

Step 407: The user plane network element determines, based on the media packet, the association information corresponding to the media packet.

It should be noted that, for this step, refer to the descriptions of step 303. Details are not described herein again.

Step 408: The user plane network element sends the media packet to the access network element via the QoS flow corresponding to the association information. Correspondingly, the access network element receives the media packet.

Step 409: The access network element sends the media packet to the terminal. Correspondingly, the terminal receives the media packet.

Specifically, for specific implementations of step 406 to step 408, refer to the method shown in FIG. 3. Details are not described again.

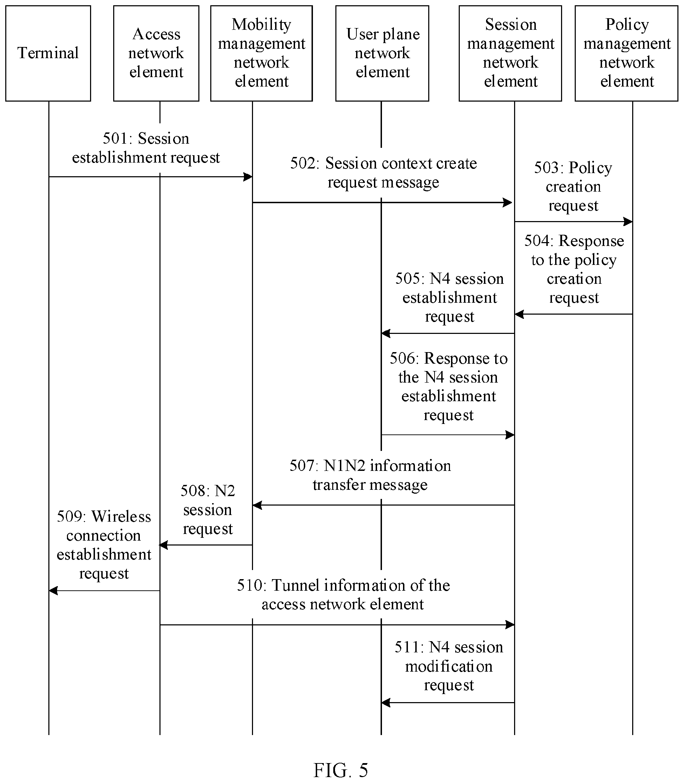

It should be noted that the method shown in FIG. 4 may occur after the terminal establishes the PDU session, in other words, after the terminal establishes the PDU session, step 401 to step 409 are performed. The method shown in FIG. 4 may also occur in a process in which the terminal establishes the PDU session. As shown in FIG. 5, FIG. 5 is a flowchart of a media packet transmission method according to an embodiment of this application. The method includes the following steps.

Step 501: A terminal sends a session establishment request to a mobility management network element through an access network element. Correspondingly, the mobility management network element receives the session establishment request.

The session establishment request is for requesting to establish a PDU session corresponding to the terminal.

Optionally, the terminal further sends a session identifier to the mobility management network element through the access network element, where the session identifier identifies a session.

Optionally, the session establishment request and the session identifier are carried in a non-access stratum message (non access stratum message, NAS message) to be sent to the mobility management network element.

Step 502: The mobility management network element sends a session context create request message to a session management network element. Correspondingly, the session management network element receives the session context create request message.

The session context create request message may include a terminal identifier, the session identifier, and the session establishment request.

Step 503: The session management network element sends a policy creation request to a policy control network element. Correspondingly, the policy control network element receives the policy creation request.

The policy creation request may include the terminal identifier and the session identifier.

Step 504: The policy control network element sends a response to the policy creation request to the session management network element. Correspondingly, the session management network element receives the response to the policy creation request.

The response to the policy creation request includes identification information of a media service, a client operation of the media service, a QoS parameter corresponding to the client operation, a priority corresponding to the client operation, or the like. The QoS parameter may be bandwidth, a latency, and the like.

Step 505: The session management network element sends an N4 session establishment request to a user plane network element. Correspondingly, the user plane network element receives the N4 session establishment request.

The N4 session establishment request includes a first correspondence or a second correspondence.

Optionally, the N4 session establishment request further includes third indication information.

Step 506: The user plane network element sends a response to the N4 session establishment request to the session management network element. Correspondingly, the session management network element receives the response to the N4 session establishment request.

The response to the N4 session establishment request includes tunnel information of the user plane network element.

Step 507: The session management network element sends an N1N2 information transfer message to the mobility management network element. Correspondingly, the mobility management network element receives the N1N2 information transfer message.

The N1N2 information transfer message includes the session identifier, the tunnel information of the user plane network element, and session establishment acceptation information. The session establishment acceptation information indicates to accept the session establishment request sent by the terminal.

Step 508: The mobility management network element sends an N2 session request to the access network element. Correspondingly, the access network element receives the N2 session request.

The N2 session request includes the session identifier, the tunnel information of the user plane network element, and the session establishment acceptation information.

Step 509: The access network element sends a wireless connection establishment request to the terminal. Correspondingly, the terminal receives the wireless connection establishment request.

The wireless connection establishment request includes the session establishment acceptation information.

Step 510: The access network element sends tunnel information of the access network element to the session management network element through the mobility management network element. Correspondingly, the session management network element receives the tunnel information of the access network element.

Step 511: The session management network element sends an N4 session modification request to the user plane network element. Correspondingly, the user plane network element receives the N4 session modification request.

The N4 session modification request includes the tunnel information of the access network element.

The session management network element sends the tunnel information of the access network element to the user plane network element and sends the tunnel information of the user plane network element to the access network element, so that the access network element establishes a connection to the user plane network element to complete a PDU session establishment procedure.

The foregoing mainly describes the solutions provided in embodiments of this application from the perspective of interaction between the devices. It may be understood that to implement the foregoing functions, the devices include hardware structures and/or software modules corresponding to the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, various network elements may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

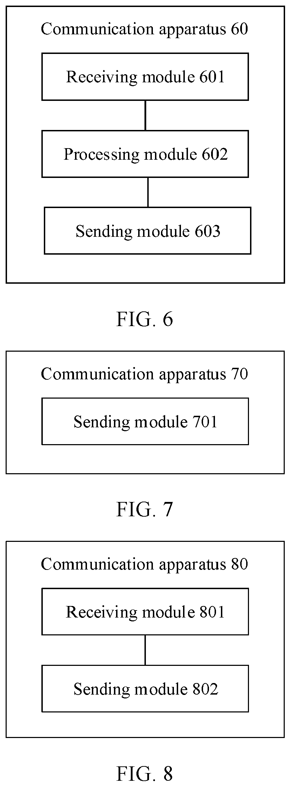

When each functional module is obtained through division based on each corresponding function, FIG. 6 shows a communication apparatus. The communication apparatus 60 may be a user plane network element, or a chip or a system-on-a-chip in the user plane network element. The communication apparatus 60 may be configured to perform a function of the user plane network element in the foregoing embodiments. The communication apparatus 60 shown in FIG. 6 includes a receiving module 601, a processing module 602, and a sending module 603.

The receiving module 601 is configured to receive a media packet from an application server.

The processing module 602 is configured to determine association information corresponding to the media packet, where the association information is information associated with a client operation corresponding to the media packet.

The sending module 603 is configured to send the media packet to an access network element via a QoS flow corresponding to the association information.

For a specific implementation of the communication apparatus 60, refer to behavior functions of the user plane network element in the media packet transmission methods in FIG. 3 to FIG. 5.

In a possible design, the processing module 602 is configured to identify the media packet that carries the association information, to obtain the association information; the receiving module 601 is configured to receive the association information from the application server; or the processing module 602 is configured to: determine, based on an obtained media packet request for requesting the media packet from the application server, a client operation corresponding to the media packet request, and determine the association information based on the client operation that corresponds to the media packet request corresponding to the media packet request.

In a possible design, the processing module 602 is configured to: perform application layer identification on the media packet to obtain the association information; perform transport layer identification on the media packet to obtain the association information; or perform network layer identification on the media packet to obtain the association information.

In a possible design, the media packet request includes a real time streaming protocol RTSP request, and the processing module 602 is configured to determine, based on the RTSP request, the client operation corresponding to the media packet request; or the media packet request includes an index number of the media packet, and the processing module 602 is configured to determine, based on the index number of the media packet, the client operation corresponding to the media packet request.

In a possible design, the association information includes first indication information, where the first indication information indicates the client operation corresponding to the media packet; or the association information includes second indication information, where the second indication information indicates a priority that corresponds to the client operation corresponding to the media packet.

In a possible design, when the association information includes the first indication information, the processing module 602 is configured to determine, based on the client operation indicated by the first indication information and a first correspondence, a QoS flow corresponding to the client operation, where different client operations correspond to different QoS flows, and the first correspondence is a correspondence between a client operation and a QoS flow; and the sending module 603 is configured to send the media packet to the access network element via the QoS flow corresponding to the client operation.

In a possible design, the receiving module 601 is configured to receive the first correspondence from a session management network element.

In a possible design, when the association information includes the second indication information, and when different priorities correspond to different QoS flows, the sending module 603 is configured to send, based on the priority indicated by the second indication information and a second correspondence, the media packet to the access network element via a QoS flow corresponding to the priority, where the second correspondence is a correspondence between a priority corresponding to a client operation and a QoS flow; or when different priorities correspond to a same QoS flow, the sending module 603 is configured to send, based on the priority indicated by the second indication information and a second correspondence, the media packet to the access network element based on the priority via the QoS flow, where the second correspondence is a correspondence between a priority corresponding to a client operation and a QoS flow.

In a possible design, the receiving module 601 is configured to receive the second correspondence from a session management network element.

In a possible design, the receiving module 601 is configured to receive, from the session management network element, third indication information that indicates the user plane network element to determine, after receiving the media packet, the association information corresponding to the media packet; and the processing module 602 is configured to determine, based on the third indication information and the received media packet, the association information corresponding to the media packet.

In a possible design, the sending module 603 is configured to send, within a validity period of a timer, the media packet to the access network element via the QoS flow corresponding to the association information.

In a possible design, the receiving module 601 is configured to receive the timer from the session management network element.

In a possible design, the client operation includes at least one of the following: initial playing, jumping, normal playing, and pause.

In another possible implementation, the receiving module 601 and the sending module 603 in FIG. 6 may be replaced with a transceiver. Functions of the receiving module 601 and the sending module 603 may be integrated into the transceiver. The processing module 602 may be replaced with a processor, and a function of the processing module 602 may be integrated into the processor. Further, the communication apparatus 60 shown in FIG. 6 may further include a memory. When the receiving module 601 and the sending module 603 are replaced with the transceiver, and the processing module 602 is replaced with the processor, the communication apparatus 60 in this embodiment of this application may be the communication apparatus shown in FIG. 2.

When each functional module is obtained through division based on each corresponding function, FIG. 7 shows a communication apparatus. The communication apparatus 70 may be a session management network element, or a chip or a system-on-a-chip in the session management network element. The communication apparatus 70 may be configured to perform a function of the session management network element in the foregoing embodiments. The communication apparatus 70 shown in FIG. 7 includes a sending module 701.

The sending module 701 is configured to send, to a user plane network element, third indication information that indicates the user plane network element to determine, after receiving a media packet, association information corresponding to the media packet, so that the user plane network element determines, based on the third indication information and the received media packet, the association information corresponding to the media packet, and sends the media packet to an access network element via a QoS flow corresponding to the association information, where the association information is information associated with a client operation corresponding to the media packet.

For a specific implementation of the communication apparatus 70, refer to behavior functions of the session management network element in the media packet transmission methods in FIG. 3 to FIG. 5.

In a possible design, the communication apparatus further includes a receiving module 702 and a processing module 703. The receiving module 702 is configured to receive a client operation and a QoS parameter corresponding to the client operation from a policy control network element. The processing module 703 is configured to determine, based on the QoS parameter corresponding to the client operation, a QoS flow corresponding to the QoS parameter. The sending module 701 is further configured to send a correspondence between the client operation and the QoS flow to the user plane network element as a first correspondence.

In a possible design, the receiving module 702 is configured to receive a client operation and a QoS parameter corresponding to the client operation from a policy control network element. The processing module 703 is configured to determine, based on the QoS parameter corresponding to the client operation, a QoS flow corresponding to the QoS parameter. The processing module 703 is configured to determine, based on the QoS parameter corresponding to the client operation, a priority corresponding to the client operation. The sending module 701 is configured to send a correspondence between the priority corresponding to the client operation and the QoS flow to the user plane network element as a second correspondence.

In a possible design, the receiving module 702 is configured to obtain a client operation and a QoS parameter corresponding to the client operation, and the sending module 701 is configured to send the client operation and the QoS parameter corresponding to the client operation to a policy control network element. Alternatively, the receiving module 702 is configured to obtain a client operation and a QoS parameter corresponding to the client operation, the processing module 703 is configured to determine, based on the QoS parameter corresponding to the client operation, a priority corresponding to the client operation, and the sending module 701 is configured to send the client operation and the priority corresponding to the client operation to a policy control network element.

In another possible implementation, the sending module 701 and the receiving module 702 in FIG. 7 may be replaced with a transceiver, and the processing module 703 may be replaced with a processor. Functions of the sending module 701 and the receiving module 702 may be integrated into the transceiver, and a function of the processing module 703 may be integrated into the processor. Further, the communication apparatus 70 shown in FIG. 7 may further include a memory. When the sending module 701 and the receiving module 702 are replaced with the transceiver, and the processing module 703 is replaced with the processor, the communication apparatus 70 in this embodiment of this application may be the communication apparatus shown in FIG. 2.

When each functional module is obtained through division based on each corresponding function, FIG. 8 shows a communication apparatus. The communication apparatus 80 may be an application server, or a chip or a system-on-a-chip in the application server. The communication apparatus 80 may be configured to perform a function of the application server in the foregoing embodiments. The communication apparatus 80 shown in FIG. 8 includes a receiving module 801 and a sending module 802.

The receiving module 801 is configured to receive, from a user plane network element, a media packet request for requesting a media packet from an application server.

The sending module 802 is configured to send the media packet to the user plane network element, so that the user plane network element determines association information corresponding to the media packet, and sends the media packet to an access network element via a QoS flow corresponding to the association information, where the association information is information associated with a client operation corresponding to the media packet.

For a specific implementation of the communication apparatus 80, refer to behavior functions of the application server in the media packet transmission methods in FIG. 3 to FIG. 5.

In a possible design, the communication apparatus further includes a processing module 803. The processing module 803 is configured to identify the media packet request to obtain the client operation corresponding to the media packet. The processing module 803 is further configured to determine the association information based on the client operation corresponding to the media packet. The sending module 802 is further configured to include the association information in the media packet and send the media packet to the user plane network element.

In a possible design, the processing module 803 is further configured to: determine, based on the client operation corresponding to the media packet, first indication information that indicates the client operation corresponding to the media packet, and use the first indication information as the association information.

In a possible design, the processing module 803 is further configured to receive a client operation and a priority corresponding to the client operation from a policy control network element through an application function network element. The application server determines, based on the client operation corresponding to the media packet and the priority corresponding to the client operation, second indication information that indicates the priority that corresponds to the client operation corresponding to the media packet. The application server uses the second indication information as the association information.

In a possible design, the receiving module 801 is further configured to receive a client operation and a QoS parameter corresponding to the client operation from a policy control network element through an application function network element. The processing module 803 is further configured to: determine, based on the client operation corresponding to the media packet and the QoS parameter corresponding to the client operation, fourth indication information that indicates the QoS parameter that corresponds to the client operation corresponding to the media packet, and use the fourth indication information as the association information.

In another possible implementation, the receiving module 801 and the sending module 802 in FIG. 8 may be replaced with a transceiver, and the processing module 803 may be replaced with a processor. Functions of the receiving module 801 and the sending module 802 may be integrated into the transceiver, and a function of the processing module 803 may be integrated into the processor. Further, the communication apparatus 80 shown in FIG. 8 may include a memory. When the receiving module 801 and the sending module 802 are replaced with the transceiver, and the processing module 803 is replaced with the processor, the communication apparatus 80 in this embodiment of this application may be the communication apparatus shown in FIG. 2.

Embodiments of this application further provide a computer-readable storage medium. All or some of the procedures in the foregoing method embodiments may be completed by a computer program instructing related hardware. The program may be stored in the computer-readable storage medium. When the program is executed, the procedures of the foregoing method embodiments may be included. The computer-readable storage medium may be an internal storage unit of the terminal (including a data transmit end and/or a data receive end) in any one of the foregoing embodiments, for example, a hard disk drive or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that are configured on the terminal. Further, the computer-readable storage medium may alternatively include both the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, terms "first", " second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A media packet transmission method, comprising:
receiving, by a user plane network element, a media packet from an application server;
determining, by the user plane network element, association information corresponding to the media packet, wherein the association information is information associated with a client operation corresponding to the media packet; and
sending, by the user plane network element, the media packet to an access network element via a quality of service QoS flow corresponding to the association information.

2. The method according to claim 1, wherein the determining, by the user plane network element, association information corresponding to the media packet comprises:
identifying, by the user plane network element, the media packet to obtain the association information, wherein the media packet carries the association information;
receiving, by the user plane network element, the association information from the application server; or
determining, by the user plane network element based on an obtained media packet request, a client operation corresponding to the media packet request, and determining, by the user plane network element, the association information based on the client operation that corresponds to the media packet request corresponding to the media packet, wherein the media packet request is for requesting the media packet from the application server.

3. The method according to claim 2, wherein the identifying, by the user plane network element, the media packet to obtain the association information comprises:
performing, by the user plane network element, application layer identification on the media packet to obtain the association information;
performing, by the user plane network element, transport layer identification on the media packet to obtain the association information; or
performing, by the user plane network element, network layer identification on the media packet to obtain the association information.

4. The method according to claim 2, wherein the determining, by the user plane network element based on an obtained media packet request, a client operation corresponding to the media packet request comprises:
when the media packet request comprises a real time streaming protocol RTSP request, determining, by the user plane network element based on the RTSP request, the client operation corresponding to the media packet request; or
when the media packet request comprises an index number of the media packet, determining, by the user plane network element based on the index number of the media packet, the client operation corresponding to the media packet request.

5. The method according to any one of claims 1 to 4, wherein
the association information comprises first indication information, wherein the first indication information indicates the client operation corresponding to the media packet; or
the association information comprises second indication information, wherein the second indication information indicates a priority that corresponds to the client operation corresponding to the media packet.

6. The method according to claim 5, wherein when the association information comprises the first indication information, the sending, by the user plane network element, the media packet to an access network element via a QoS flow corresponding to the association information comprises:
determining, by the user plane network element based on the client operation indicated by the first indication information and a first correspondence, a QoS flow corresponding to the client operation, wherein different client operations correspond to different QoS flows, and the first correspondence is a correspondence between a client operation and a QoS flow; and
sending, by the user plane network element, the media packet to the access network element via the QoS flow corresponding to the client operation.

7. The method according to claim 6, wherein the method further comprises:
receiving, by the user plane network element, the first correspondence from a session management network element.

8. The method according to claim 5, wherein when the association information comprises the second indication information, the sending, by the user plane network element, the media packet to an access network element via a QoS flow corresponding to the association information comprises:
when different priorities correspond to different QoS flows, sending, by the user plane network element based on the priority indicated by the second indication information and a second correspondence, the media packet to the access network element via a QoS flow corresponding to the priority, wherein the second correspondence is a correspondence between a priority corresponding to a client operation and a QoS flow; or
when different priorities correspond to a same QoS flow, sending, by the user plane network element based on the priority indicated by the second indication information and a second correspondence, the media packet to the access network element based on the priority via the QoS flow, wherein the second correspondence is a correspondence between a priority corresponding to a client operation and a QoS flow.

9. The method according to claim 8, wherein the method further comprises:
receiving, by the user plane network element, the second correspondence from a session management network element.

10. The method according to any one of claims 1 to 9, wherein the method further comprises:
receiving, by the user plane network element, third indication information from the session management network element, wherein the third indication information indicates the user plane network element to determine, after receiving the media packet, the association information corresponding to the media packet; and
determining, by the user plane network element based on the third indication information and the received media packet, the association information corresponding to the media packet.

11. The method according to any one of claims 1 to 10, wherein the sending, by the user plane network element, the media packet to an access network element via a QoS flow corresponding to the association information comprises:
sending, by the user plane network element within a validity period of a timer, the media packet to the access network element via the QoS flow corresponding to the association information.

12. The method according to claim 11, wherein the method further comprises:
receiving, by the user plane network element, the timer from the session management network element.

13. The method according to any one of claims 1 to 12, wherein the client operation comprises at least one of the following: initial playing, jumping, normal playing, and pause.

14. A communication apparatus, wherein the communication apparatus comprises one or more processors and a transceiver, and the one or more processors and the transceiver support the communication apparatus in performing the media packet transmission method according to any one of claims 1 to 13.

15. A computer-readable storage medium, wherein the computer-readable storage medium stores computer instructions or a program; and when the computer instructions or the program is run on a computer, the computer is enabled to perform the media packet transmission method according to any one of claims 1 to 13.

16. A communication system, wherein the communication system comprises a user plane network element and an application server, wherein
the application server is configured to send a media packet to the user plane network element; and
the user plane network element is configured to receive the media packet from the application server; the user plane network element determines association information corresponding to the media packet, wherein the association information is information associated with a client operation corresponding to the media packet; and the user plane network element sends the media packet to an access network element via a quality of service QoS flow corresponding to the association information.
